# EUROPEAN PATENT SPECIFICATION

(11) **EP 3 804 463 B1**
(45) Date of publication and mention of the grant of the patent: **01.10.2025**
(21) Application number: 19725755.3
(22) Date of filing: 27.05.2019
(51) Int. Cl.: H05B 6/78, H05B 6/68, H05B 6/80, A23L 13/50, A23L 5/10, H05B 6/64

(54) **COMBINATION OF SOLID-STATE RF TECHNOLOGY WITH ANOTHER HEAT TREATMENT FOR FOOD**
KOMBIONATION DER FESTKÖRPER-HF-TECHNOLOGIE MIT ANDERE WÄRMEBEHANDLUNG FÜR LEBENSMITTEL
COMBINAISON DE LA TECHNOLOGIE RF À L'ÉTAT SOLIDE AVEC UN AUTRE TRAITEMENT THERMIQUE DES ALIMENTS

(30) Priority: 25.05.2018 EP 18174306; 20.09.2018 EP 18195724
(43) Date of publication of application: 14.04.2021
(73) Proprietor: GEA Food Solutions Bakel B.V., 5761 EN Bakel (NL)
(72) Inventor: VAN ERP, Joost, 5674 RS Nuenen (NL); VAN GERWEN, Hendrikus Petrus Gerardus, 5711 TT Someren (NL)
(74) Representative: Kutzenberger Wolff & Partner
(86) International application number: PCT/EP2019/063616
(87) International publication number: WO 2019/224392

(56) References cited:
- EP-A1- 2 007 230
- EP-A1- 2 546 624
- EP-A1- 2 666 371
- EP-A2- 1 471 773
- WO-A1-2015/171763
- US-A- 5 334 402
- US-A- 6 132 783

## Description

The present invention relates to a line for cooking a substance according to claim 1.

The present invention further relates to a method for cooking a substance with a line according to claim 12.

Treating substances by passing microwave radiation through the substances is common as well as in domestic as in industrial applications. A conventional microwave oven for instance comprises a magnetron which produces the microwave energy. However, in industrial applications wherein microwaves are generated by a magnetron the long operating times will result in undesirable heat development and/or the process is not sufficiently controllable. Additionally, undesired hot spots may occur.

EP 2 546 624 A1 (CFS BAKEL BV [NL]) 16 January 2013 (2013-01-16) discloses a heat-treatment-device for protein containing products, which are transported by a transportation means through the device and past at least one microwave-radiometer-antenna.

It is therefore the objective of the present invention to provide a processing apparatus and a method that do not comprise the deficiencies according to the state in the art.

This object is achieved with a line for cooking a substance with an apparatus comprising a multitude of solid-state radio frequency source(s) and a further heat treatment apparatus.

The disclosure made regarding this subject matter of the present invention also applies to the other invention and vice versa. Subject matters disclosed regarding this invention can also be combined with subject matters from other inventions of the present application.

The present invention relates to a processing line with a solid-state radio frequency (RF)-transistor(s) in a RF power amplifier. A radio frequency power amplifier is an electronic amplifier, that converts a low power radio frequency signal into a higher power signal. Typically, RF-power amplifiers drive the antenna of a transmitter. The antenna can be coupled to and/or located in a waveguide, wherein the antenna can radiate the microwaves into the waveguide which preferably is designed of reflective material and can guide the microwaves to a desired location, for example into the product chamber wherein the substances to be treated are located. Compared to a magnetron, an advantages of a solid-state RF energy technology is a low voltage drive, semiconductor reliability and lower energy consumption due to the advanced control system. The inventive apparatus can be used to cook a substance.

The substance is preferably an edible substance for human- and/or animal-consumption, particularly protein containing food substance, particularly meat. The meat can be meat at a bone-structure, muscle meat and/or minced meat. In case the substance comprises a bone-structure, the bone structure is at least partially surrounded be the meat. A typical example for a substance with a bone structure is a chicken-wing, a chicken-leg, a leg from a pig or a lamb and/or fish. The substance can also be dough. The substance can also comprise at least parts of an insect or a mixture of insects. Those insects are preferably supplied alive to the inventive apparatus or line and are killed by microwave radiation. In another embodiment already killed insects will be preheated/precooked before the following processing step. Transistor technology generates powerful RF fields. Preferably multiple RF sources will be applied, the sources can be controlled individually and preferably related to each other. For instance, in an application pumping a mass through a tube, gradually heating of the substance can be achieved by controlling the electromagnetic fields by controlling the power level, frequency and phase versus time with such precision that an even energy distribution will be achieved. In general, in case of a change in load in a certain spot of the substance, mass, substance flow or mass flow, the controller can control the specific parameters parameter in that certain spot in order to correct the adverse effects of the load change. For instance, during cooking the load will change constantly, this change in load will be detected via the antenna by measuring the reflected energy. The control system will compare the transmitted energy via the antenna with the reflected energy and will consequently adjust the energy to be transmitted by the antenna. For instance, if no load is present within the product chamber, no energy will be absorbed, the antenna receives the reflected energy and the control unit will stop transmitting new energy to the product chamber. With solid-state RF energy sources, the amplitude, the frequency, the phase versus time and/or the direction, and/or the total radiation energy emitted can be controlled for each and every antenna. Such an advanced energy management system based on a fast response to the heat demand in certain spots of the substance(s) to be heated prevents damaging of internal component and prevents an uncontrolled substance treatment with uneven energy distribution. Due to the efficient use of energy resulting in less energy loss an additional advantage of solid-state RF energy sources is an increase in yield of substances to be treated.

Additionally, according to the present invention, the line comprises a further heat treatment apparatus. In this heat treatment apparatus, the substance is preferably further cooked, browned, fried, smoked and/or roasted. The further heat treatment apparatus may be, relative to the flow of the substances, upstream or downstream from the solid-state radio frequency source(s)

A line according to the present invention comprises several treatment steps provided in a sequence. The substance is supplied to the line at its begin and is then transported continuously or semi-continuously through the line until the end of the line, where the substance is discharged and/or packaged. The transportation can be done by means of a conveyor, for example a belt, which connects the apparatus. Preferably, the line comprises a common control unit, which controls the individual apparatus as well as the handover of the substances from one apparatus/step to the other.

According to the present invention, the apparatus comprises a multitude of solid-state radio frequency sources. Each radio frequency source can be preferably powered individually and each radio frequency source can be preferably controlled, more preferably closed loop controlled, individually. The frequency, the wavelength, the phase versus time, the amplitude, the direction of radiation and/or the overall magnitude of the radiated power can be controlled.

The solid-state radio frequency sources are preferably provided in an array of n columns and m rows, wherein n is an integer > 1 and m is an integer ≥ 1. Preferably, the solid-state radio frequencies are arranged equidistantly in one row and/or the columns are also arranged equidistantly. In case a multitude of sources, they can be arranged at random.

Preferably, the solid-state radio frequency sources are provided equidistantly around the circumference of product chamber. In this chamber, the edible substance to be treated will be placed or it will be transported through this product chamber.

According to a preferred embodiment, each apparatus in the line comprises an inlet and an outlet, which are spaced apart from each other. The, preferably edible, substance enters each apparatus through the inlet, passes through the apparatus and then exits the apparatus through the exit which is preferably different from the inlet.

Preferably, each apparatus comprises means to transport the substance past the treatment means of the apparatus, for example the solid-state radio frequency source(s). These means can be a tube and a pump, which pumps the substance through the tube. The tube is in the present case the product chamber. Preferably, the tube is at least partially made from a material, that is at least partially transmittable, preferably transparent for the RF-radiation. The tube can for example be made from a plastic material, preferably from a food grade plastic material. The pump pumps the substance preferably as a continuous or semi-continuous stream past the RF-source(s). The speed at which the substance is pumped is preferably adjustable, so that the residence time in the product chamber can be varied. The means can also be a conveyor, for example a belt, preferably an endless belt or an endless chain, wherein the chain is preferably not made from a metal material. The conveyor is preferably at least partially transmittable for the RF-radiation. This conveyor transports the edible substance, preferably as individual portions, past the solid-state radio frequency source(s). The substances are preferably transported continuously or intermittently by the conveyor. The speed of the conveyor is preferably adjustable, so that the residence time in the product chamber can be varied. Each apparatus of the line may have its own conveyor means, particularly conveyor belt, which transports the substances through the respective apparatus.

At least some of the conveyors, preferably each conveyor, is adapted to the specific requirements in the respective apparatus. The products are preferably handed over from one conveyor to the other. At least one of the conveyors may comprise means to distribute and/or accumulate the products on the respective conveyor and more preferably according to the needs of the specific treatment step.

According to the invention, each processing apparatus and/or the line comprises a control system to control the individual apparatus, for example the solid-state radio frequency source(s) and/or the transportation means. The control system preferably comprises one or more sensors, whose signal(s) is used to control the parameters of one or more apparatus in order to achieve desired treatment of the substance. Preferably, each apparatus is controlled individually, but preferably by a common line control system. Preferably one or more sensors are utilized to control one or more solid-state radio frequency source(s), preferably individually and/or related to each other. For instance, in an application pumping a mass through a tube, gradually heating of the mass can be achieved by controlling the electromagnetic fields by controlling the power level, frequency and/or phase versus time with such precision that, for example, an even energy distribution in the product chamber or in the substance will be achieved. The RF-energy load can be adapted to the progress of the treatment process. For instance, during cooking the RF-energy load can change. This change in load can be detected, for example via the antenna by measuring the reflected energy. The control system will compare the transmitted energy via the antenna with the reflected energy and will consequently adjust the energy to be transmitted by the antenna. At each solid-state RF energy sources, the amplitude, the frequency, the wavelength, the phase versus time, and/or direction of radiation can be controlled individually and/or in groups. The antenna may function as a sensor, for example to detect the radiation reflected from the substance to be treated.

The control system preferably controls at least one solid-state radio frequency source such that it specifically heats the bone structure, in order to specifically heat the meat surrounding the bone so that it reaches a temperature of at least 80°C, preferably at least 84°C. This preferred embodiment is particularly preferable in case the, solid-state radio frequency source(s) is used as a post heating step.

The sensor can sense one or more properties of the substance, for example its temperature and/or the energy absorbed by the substance or part of the substance, for example a bone-structure and/or the meat surrounding a bone structure. One sensor can measure what kind of radiation is reflected from the substance, for example the wavelength. The sensor can measure a temperature inside the substance, preferably the core temperature and/or a temperature distribution within the substance. In case the substance is transported during its treatment, particularly with the RF-radiation, there can be multiple sensors along the transportation path. The local reading of the sensors can be used to control the corresponding local treatment apparatus, for example the solid-state radio frequency source(s) and/or the solid-state radio frequency source(s) upstream and/or downstream from the respective sensor.

The inventive food production line, preferably also comprises one or more treatment apparatus upstream and/or downstream from the apparatus with the solid-state radio frequency source(s), which change the consistency, the shape and/or the surface of the substance, for example a cutting-,grinding-,injection-,marinating-station, a forming station, a batter-station and/or a marination-station. The stations can be combined with conveyors. Preferably the substance enters the line at its entrance and then passes successively all stations of the respective line until it finally exits the line.

Preferably, the inventive line is provided downstream from a hopper in which, for example, a batch of an edible material is stored.

Preferably, one or more apparatus in the line, particularly the apparatus with the solid-state radio frequency source(s), can be at least partially isolated from the ambient by one or more valves/gates. The substance, preferably the edible product, enters the respective apparatus, for example by means of a conveyor. Then the conveyor is stopped and a valve, like a gate is closed, preferably at the entrance and at the exit of the conveyor, so that, for example, no or little radiation can exit from the apparatus to the ambient. After the RF-treatment, the valve/gate is reopened again and the treated substance can exit the apparatus and preferably simultaneously untreated substance enters the apparatus. The valve/gate can also be a feedthrough, particularly a rotary feedthrough, so that a continuous or semi-continuous substance flow can be achieved.

Line according to the present invention preferably comprises:
- a solid-state RF energy source microwave preheating step is followed by a frying-step or vice versa and/or
- a solid-state RF energy source microwave precooking step is followed by a cooking-step or vice versa and/or
- a solid-state RF energy source microwave drying step is followed by a browning-step or vice versa and/or
- solid-state RF energy source microwave drying step is followed by a roasting-step and/or
- solid-state RF energy source microwave drying step is followed by a smoking-step or vice versa and/or
- solid-state RF energy source microwave drying step is followed by a radiation-step, such as infrared and grilling, or vice versa and/or
- a frying step is followed by a solid-state RF energy source microwave precooking step, which is followed by a browning and/or roasting and/or smoking and/or radiation step or in a different sequence.

According to a preferred embodiment of the present invention, the solid-state RF energy source(s) and the convection cooking means are provided in one housing, preferably connected by conveyor means. The conveyor means are preferably adapted to the needs during the solid-state RF energy source microwave treatment step and the convection cooking step. Alternatively, two successive conveyors are provided, each adapted to the specific need of the solid-state RF energy source microwave treatment step and the convection cooking step.

Preferably, the line comprises means to measure the doneness of the substance. The doneness can, for example be determined by a temperature at the core of the substance, at a bone-structure within the substance and/or by determining a temperature distribution within the substance. The doneness can be determined for each substance or at random. Preferably, the measurement of the doneness is executed with the solid-state RF energy source(s). The RF energy source(s) are preferably controlled based on such a measurement, for example to specifically heat the at the core of the substance and/or at a bone-structure within the substance. In this case it is preferred that the RF energy source(s) is provided downstream form a conventional heating step such as frying, roasting, browning or cooking.

Preferably, the substance comprises a bone-structure, wherein at least one solid-state radio frequency source is controlled to specifically heat the bone-structure and/or the meat surrounding the bone-structure. This can be for example carried out by controlling the frequency, the wavelength, the phase versus time, the amplitude, the direction of radiation and/or the overall magnitude of the radiated power of at least one RF energy source such the specifically the bone structure and/or the meat surrounding the bone structure are heated, so that their temperature is increased fast, while preferably the other meat of the substance is heated less.

The problem is also solved with a method for heating, drying, cooking, disinfecting, pasteurizing and/or sterilizing a substance with an apparatus comprising at least a solid-state RF energy source microwave heating step and a further heat treatment step.

The disclosure made regarding this subject matter of the present invention also applies to the other invention and vice versa. Subject matters disclosed regarding this invention can also be combined with subject matters from other inventions of the present application.

The problem is furthermore solved with a method for heating, drying, cooking, disinfecting, pasteurizing and/or sterilizing a substance with an apparatus comprising a heat treatment step and a post heating with at least a solid-state RF energy source microwave heating step.

The disclosure made regarding this subject matter of the present invention also applies to the other invention and vice versa. Subject matters disclosed regarding this invention can also be combined with subject matters from other inventions of the present application. The following disclosure applies to both inventive methods.

The substance to be treated can be an edible substance, for example meat, fish or dough. The fish and the meat may comprise a bone-structure. The substance can also be an insect, which is, for example, killed by the RF-radiation. In another embodiment already killed insects will be preheated/precooked before the following processing step.

Preferably the substance is transported from an inlet of a treatment apparatus to an exit of the same apparatus which are spaced apart.

The substance can be transported continuously and/or intermittently. They can be transported as a string as an array or as individual portions.

Preferably one or more sensors are provided which measure one or more properties of the edible substance and/or the radiation reflected from the substance. The substance-properties are preferably measured at least twice during its treatment, preferably during its treatment with RF-radiation. The changes of the properties are determined and can be taken into account when controlling the solid-state radio frequency source(s) and/or another apparatus in the line.

Preferably, the substance is heated, cooked, dried, disinfected and/or pasteurized, sterilized, fried, roasted, browned smoked and/or grilled.

At least one parameters of the substance to be treated are inputted into a control system and that a control unit sets the parameters at least for the solid-state RF energy source microwave heating step accordingly. One example of a parameter is for example whether the substance comprises a bone-structure and/or the size, preferably the average size of the bone-structure, or the volume of the bone structure, preferably versus the volume of the surrounding meat.

Preferably, the substance comprises a bone-structure, wherein the post heating, i.e. the heating after a preheating step is adapted to specifically heat the bone-structure. Preferably, the post heating is carried out with RF-radiation and at least one solid-state RF energy source is controlled to specifically heat the bone structure or the meat surrounding the bone structure. This can be carried out by controlling the frequency, the wavelength, the phase versus time, the amplitude, the direction of radiation and/or the overall magnitude of the radiated power to specifically heat the bone-structure and/or the surrounding meat.

Preferably, at least one solid-state radio frequency source is utilized to measure the doneness of the substance.

Preferably, the parameters of the further heat treatment step or the post heating step are controlled by the control unit.

The problem is also solved with a method of treating a substance containing a bone structure, wherein the bone marrow is heated with microwaves generated by solid-state RF energy sources.

The disclosure made regarding this subject matter of the present invention also applies to the other invention and vice versa. Subject matters disclosed regarding this invention can also be combined with subject matters from other inventions of the present application.

The following disclosure applies specifically to both inventive methods and the inventive lines.

As an example, the chickens we consume today are between six and eight weeks old and have under developed more porous bones than older chickens. When young chickens/broilers are frozen, liquids in the mass of chicken including bone marrow will expand. The bone marrow inside of chicken bones is purplish and can permeate through the porous chicken bones as it expands and forms ice crystals. These ice crystals further break down the bone structure. In case of heating products with bones such as chicken drumsticks, for instance after coating these products, the purple marrow in the bones seep through the porous bones and leaks into the meat. The surface of the bones and the adjacent meat become deep red/purple or even black which is visible and unattractive. First cooking and then coat the food product with for instance batter results also in leakage of bone marrow however the coating camouflages this.

Surprisingly, it has been found, that the leakage of bone marrow can be reduced or preferably stopped by coagulate the marrow within the bones by using microwaves generated by solid-state RF energy sources. The settings such as power level, frequency, wavelength, phase versus time, amplitude, magnitude of radiated power and/or direction of radiation will be optimized to penetrate the chicken meat, bone structure and to treat bone marrow. The treatment of substances comprising a bone-structure with microwaves will be applied before the substances are subjected to a heat treatment process such as frying and cooking, preferably the treatment will be applied before the fresh chicken bone-structure containing substances will be frozen. The process to minimize/stop leakage of marrow is not limited to chicken bone-structure comprising substances but is also applicable for other bone-structure containing substances such as beef, lamb, pork, poultry in general.

Preferably the microwave heating is carried out prior to a heat treatment of the substance, preferably in an oven or a fryer, or prior to freezing of the substance.

The inventions are now explained according to the Figures. The explanations apply for all embodiments of the present invention likewise.

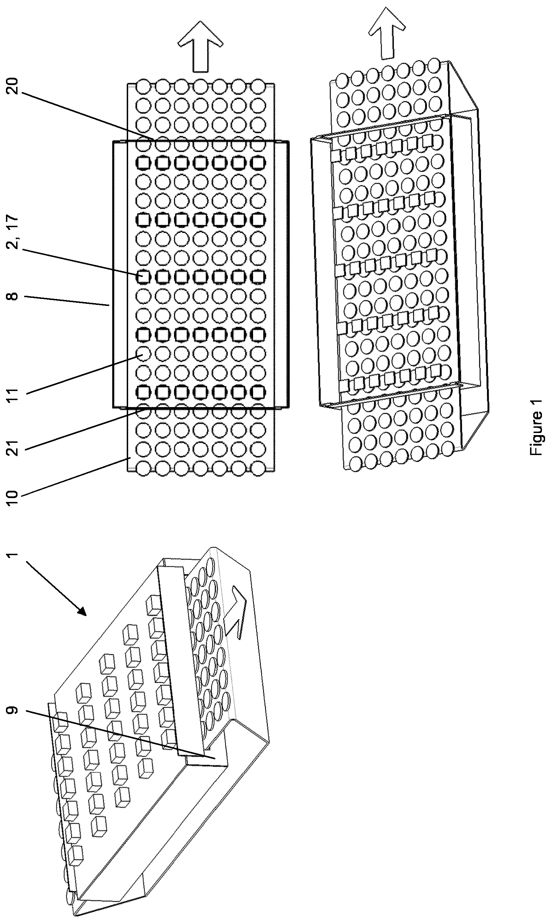

The inventions are now explained according to Figures 1 - . These explanations do not limit the scope of protection. The explanation applies to all inventions likewise.
- **Figures 1 - 5**: each depict a heat treatment line 1 comprising conveyor means.
- **Figures 6 - 11**: each depict a heat treatment line and a comparison to the prior art.
- **Figure 12**: depicts a cooking apparatus.
- **Figure 13a**: depicts a heat treatment line.
- **Figure 13b and 14**: each depict a cooking apparatus.
- **Figures 15 and 16**: each depict a heat treatment line with conveyor means.
- **Figures 17 - 23**: each depict a heat treatment with a post-heating with a solid-state RF energy source microwave.
- **Figures 24 - 29**: each depict a line with a coating application.
- **Figure 30**: depicts the inside of a microwave processing apparatus.
- **Figures 31 - 32**: each depict a line with an oven.

**Figure 1** depicts a heat treatment apparatus 1 comprising conveyor means 10, here an endless belt, running through a housing 8, here a tunnel shaped housing, provided with an inlet 21 and an outlet 20, which are separated from each other. The substances 11 is transported past at least one, preferably a multiple, of solid-state RF energy sources 2. The housing 8 can extend in the transport direction around the substances 11 to be heat treated and/or around the conveyor means 10. The housing preferably comprises a slot at the inlet and at the outlet for the conveyor means 10. The housing 8 can be similar to a Faraday cage preventing electromagnetic waves coming out of the housing. At least the inner wall 9, but preferably the entire housing 8, can be made of metal, preferably steel, for instance stainless steel to shield the electromagnetic radiation. In a preferred embodiment, the housing 8 comprises reflection- and/or absorption means at its inner surface to at least partially eliminate radiation from external sources that enters the housing through the inlet and/or the outlet and/or to prevent radiation leaking via the inlet and/or outlet to the surrounding. The reflection- and/or absorption means avoids that this electromagnetic radiation reaches the antenna 17. The radiation from the multiple antennas preferably need not have to be shielded from each other.

The number of solid-state elements 2/antennas 17 preferably depends on, for instance, the required heating power, the width of the belt, the length of the housing, the number and/or size and/or consistency of substances 11, the position of the substances on the belt, the speed of the belt and/or the desired accuracy and/or speed of the heat treatment process, particularly the uniformity of the heating process. **Figure 1** shows an embodiment with multiple solid-state elements 2/antennas 17 positioned in each and every line of food substances. The substances 11, here provided in arrays, are transported continuously or intermittently from the inlet 21 to the outlet 20 and past the solid-state RF energy sources 2, which emit microwaves, which heat the substances 11. Preferably, a multitude of rows, here five, of elements 2/antennas 17 are provided along the path of the substances 11. The rows of solid-state elements 2/antennas 17 are provided preferably equidistantly and/or each line comprises a multitude of solid-state elements 2/antennas 17, which are preferably arranged perpendicular to line of transportation of the substances 11. In each row, the solid-state elements 2 are preferably arranged equidistantly. Each solid-state elements 2 is preferably controlled individually and/or each solid-state element 2 or a group of solid-state elements 2/antennas 17 in one line are controlled individually.

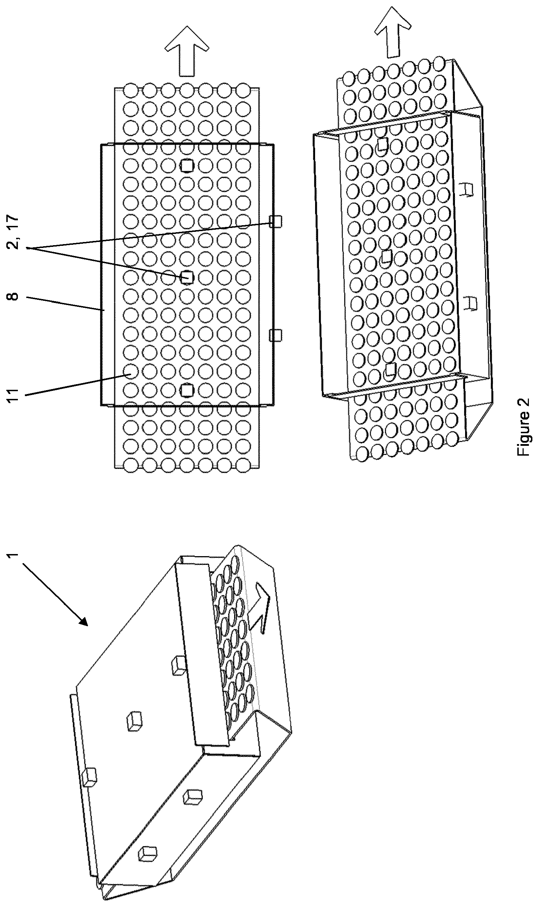

Regarding the embodiment of **Figure 2****,** reference can be made to the disclosure regarding **Figure 1****.** **Figure 2** shows an embodiment wherein the heat treatment apparatus 1 is provided with multiple, here three solid-state elements 2/antennas 17, here above the substances and two in one of the two sidewalls of housing 8. In this example, the substances are arranged in an array and transported as an array past the solid-state elements 2/antennas 17.

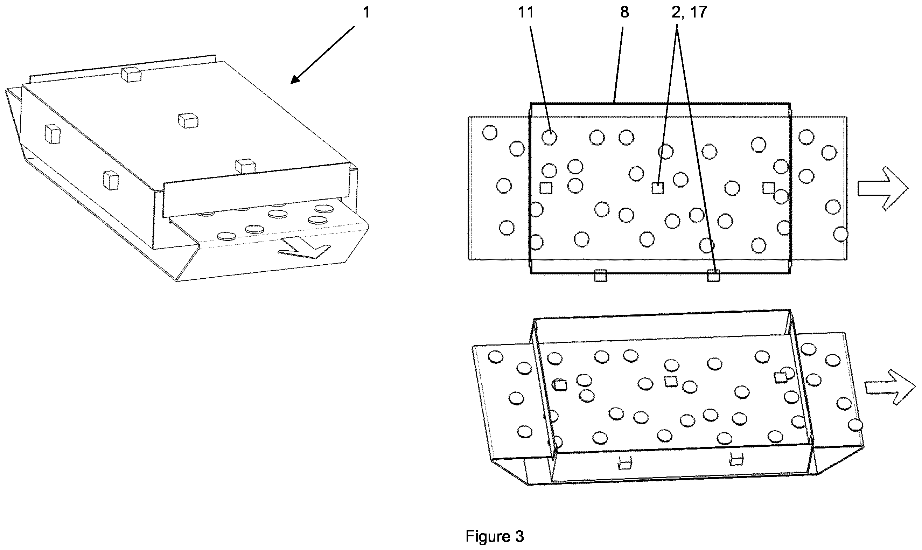

**Figure 3** depicts an embodiment with randomly oriented substances on the conveyor means 10. Otherwise, reference is made to disclosure regarding **Figures 1** **and** **2****.**

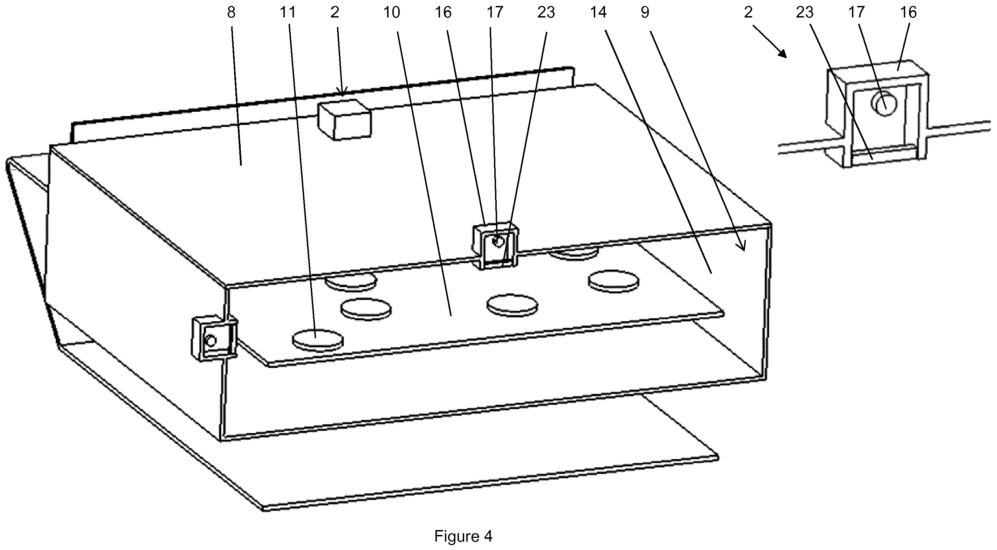

Regarding the embodiment according to **Figure 4** reference is made to the disclosure according to the previous Figures. **Figure 4** depicts a cross view and a detail of an embodiment of a solid-state RF energized microwave apparatus. The solid-state energy sources 2 comprise a waveguide 16 and/or an antenna 17. The energy sources are preferably in direct contact with chamber 14 wherein the substances can be (pre)heated and/or (pre)cooked. Preferably microwave transparent shielding means 23 are provided to prevent pollution of the waveguide and antenna for example with the food substance.

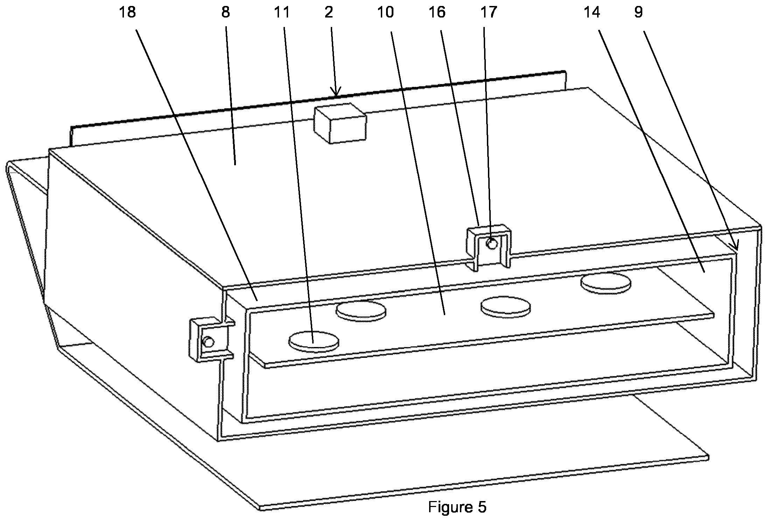

Regarding the embodiment according to **Figure 5** reference is made to the disclosure according to the previous Figures. **Figure 5** depicts a cross view of an embodiment of a solid-state RF energized microwave apparatus wherein a cooling chamber 18 is provided which is connected to a cooling circuit for instance a water cooling- and/or a gas-, preferably air-, cooling circuit. Shielding means 23 as depicted in **Figure 4** are preferably provided to protect the solid-state element 2/antenna 17 against the cooling medium. Despite this efficient energy management additional cooling of the waveguides and connected antennas may be desirable in case of high energy output, for example during a long period of operation time. In another not depicted embodiment the solid-state RF energy source can be cooled and/or its power supply. This can be done per RF energy source 2 if needed. The cooling of the solid-state RF energy source(s) is preferably controlled by a temperature measurement, which measures the temperature of one or more of the RF energy source 2 and based on this reading controls a fluid flow of the cooling agent and/or its temperature.

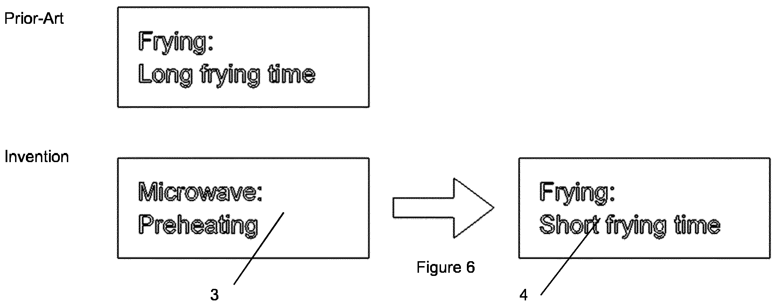

**Figure 6** shows an inventive line and a comparison to the state in the art. **Figure 6** depicts a frying application wherein food substances are first preheated with solid-state RF energy sources till a predetermined temperature/value. Compare to the Prior-Art wherein no preheating takes place, the residence time of the food substances in the fryer can be shorter; i.e. partial-frying instead of deep drying resulting in a shorter and cheaper fryer and less operating costs due to reduced oil volume within the fryer. The food substance will absorb/pick-up less oil due to the shorter fryer time resulting in less fattier food substances with less calories and still coloured and crispy. In case the customer wants to maintain the same dimension fryer the addition of preheating by microwaves will result in a higher throughput/yield of food substances.

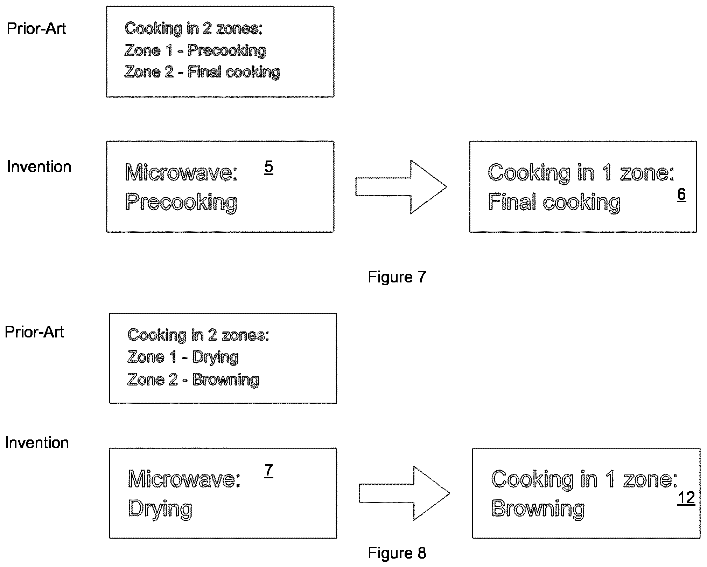

**Figure 7** shows an inventive line and a comparison to the state in the art. **Figure 7** depicts a cooking application wherein food substances are precooked, preferably with minimum yield loss, with solid-state RF energy sources until a predetermined temperature/value in the core or a desired temperature distribution in the substance has been reached. Compared to the prior-art wherein no precooking takes place, the residence time of the food substances in the convection/steam oven can be shorter resulting in a shorter/smaller and cheaper oven or a higher throughput. In the embodiment according to **Figure 7** preferably only one cooking zone within the convection/steam oven is sufficient; in case of a linear convection oven the oven can be shorter, in case of a spiral convection oven provided with a double spiral layout, an oven provided with a single spiral layout will be sufficient. In case the customer wants to maintain the same dimension of the oven the addition of preheating by microwaves will result in a higher throughput/yield of food substances.

**Figure 8** shows an inventive line and a comparison to the state in the art. An application used in the field of cooking is an oven with 2 zones where in a first zone the food substances are dried, followed by a second zone wherein the food substances are browned. **Figure 8** depicts such the inventive line or method wherein first the food substances are dried by microwaves generated by solid-state RF energy sources and subsequently, the food substances are browned in a convection oven provided with preferably only one climate zone.

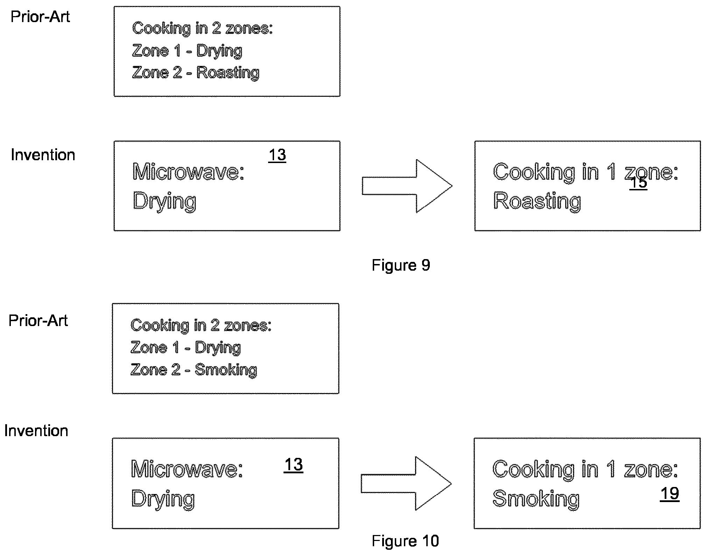

**Figure 9** depicts an inventive line and a comparison to the state in the art. **Figure 9** depicts an application wherein drying by microwaves generated by solid-state RF energy source(s) is followed by roasting in a convection oven,

**Figure 10** shows an inventive line and a comparison to the state in the art. **Figure 10** depicts an application wherein drying by microwaves generated by solid-state RF energy source(s) is followed by smoking with for example natural gaseous smoke and/or liquid smoke in preferably a continuous oven.

In applications depicted in **Figure 7** - **Figure 10** are, based on cost efficient line solutions, after precooking the final cooking step performed in preferably one climate zone. However, the invention is not limited to the use of only one climate zone after precooking the food substances.

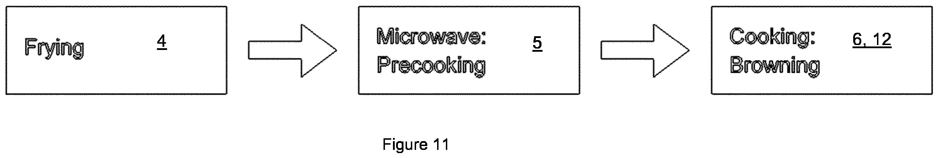

**Figure 11** shows an inventive line. **Figure 11** depicts an application directed to preferably coated food substances for instance battered and breaded meat substances. Depending on the type of coating, to avoid damage of the coating the food substances should be dropped directly into an oil bath and should be fried for at least several seconds. In case of non-buoyant food substances, a Teflon belt can be provided within the fryer to prevent sticking of the coating/coated substances to the belt. This frying process with only very short frying time will set the coating such that it will be less vulnerable and that the coated substances are able to be further transported on conveyor means 10 to a microwave precooking apparatus to precook the substances and finally to an oven, preferably a convection oven, to brown the food substances.

In an embodiment of the invention the temperature of food substances 11 spread across the width of the conveyor means 10 is measured and in case of deviating temperatures of the substances, the difference will at least partially be equalized. Reference can be made to **Figure 1** to **Figure 5****.** The solid-state energy sources will transmit energy towards the food substances and will be able to detect how much energy will be reflected. Based on this measurement, a control unit can calculate how much energy is absorbed by the food substances. Depending on this measurement-result, the temperature of the individual food substances which are below a predetermined temperature range can be adjust/increased by directing microwave energy to these individual substances.

In a preferred embodiment of the invention a heat treatment line comprises a multitude of heat treatment apparatus including at least one microwave heating apparatus, wherein the microwaves are generated by solid-state RF energy sources. Other apparatus in this heat treatment line are for instance a deep fat fryer, a convection cooking heating apparatus and/or a steaming apparatus. For example, precooking takes place in a linear microwave oven and final cooking takes place in a single spiral oven.

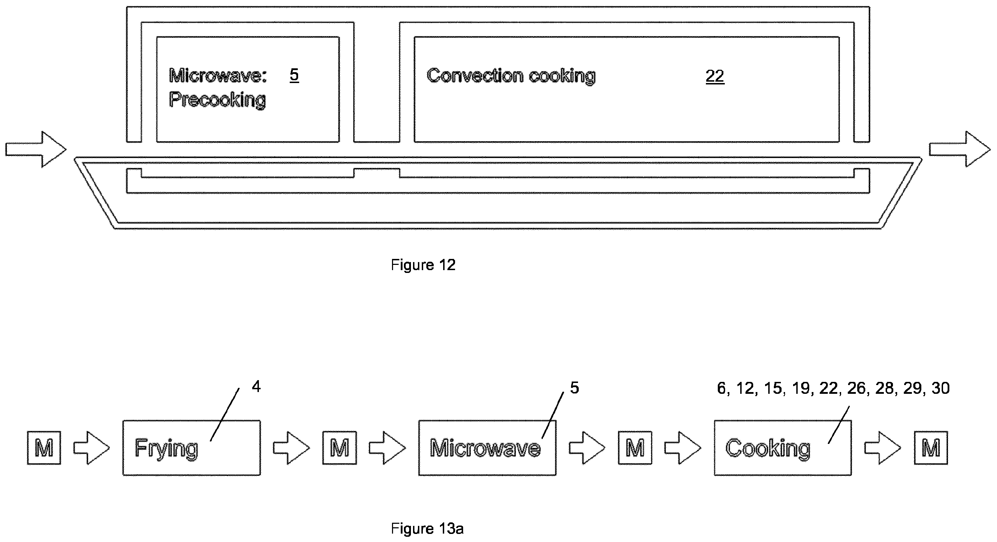

In another embodiment, the function of multiple separate heating apparatus will be combined in one or more heating apparatus. For instance, a single heat treatment apparatus is provided with microwave heating means generated by solid-state RF energy sources in one zone and convection heating means in one or more other zones. **Figure 12** depicts such a, preferably linear, oven wherein a first zone to precook food substances with microwaves generated by solid-state RF energy sources. Depending on the dewpoint in the second zone condensation cooking and/or convection cooking will take place. The dewpoint within the second zone/cooking chamber during cooking can be adjusted, therefor the oven can be provided with at least one fan, at least one heating element, at least one fluid supply, preferably a steam or water supply and/or at least one fresh air supply. The food substances will be heated by a hot air/fluid forced over the surface of the food substance.

In a further embodiment solid-state RF energy sources to generate microwave heating will be provided within one or more cooking chambers/zones combined with one or more other heating means. Aim of this inventive application is to end up with the desired texture, taste/bite, moisture content, appearance and color of the resulting substance in a relatively short period of time by a combination of simultaneously running heat treatment processes in one and the same cooking chamber/zone such as a combination of microwave heating generated by solid-state RF energy sources and convection heating. In case multiple climate zones are needed, the oven will be provided with multiple cooking chambers/climate zones and each and every chamber/zone can be provided with multiple heating means resulting in an extension of the scope of substance and process applications.

Preferably, the processing apparatus and/or the inventive line comprises a control system to control the solid-state radio frequency sources. The control system preferably comprises one or more sensing means, whose signal(s) is used to control one or more solid-state radio frequency source(s), preferably individually and/or related to each other. For instance, in an application transporting substances over a continuous running belt, gradually heating of the substances can be achieved by controlling the electromagnetic fields by controlling the frequency, the wavelength, the phase versus time, the amplitude, the direction of radiation and/or the overall magnitude of the radiated power. The phase of the signal from one or more solid-state RF energy sources can be shifted relative to the others which will change the energy distribution within the cooking chamber. This with such precision that, for example, an even energy distribution in the product chamber or in the substance will be achieved. Other parameters influencing the heat treatment of food substances are type of food, weight, temperature, moisture content and parameters related to the processing apparatus such as heating power. During heat treatment of food substances parameters such as temperature and moisture content will change and therefore multiple measurements should be done in the course of the process. Consequently, the control unit will take these measurements into account when controlling the solid-state radio frequency sources. The closed-loop control system will use the feedback information of the sensing means to select the timing or the heat sources, the power of the heat sources and the climate in the oven such that the cooking of the substances will be optimized.

In a preferred embodiment of the invention the solid-state RF energy load can be adapted to the progress of the treatment process. For instance, during cooking the solid-state RF energy load can change. This change in load can be detected, for example via the antenna 17 by measuring the reflected energy. The control system will compare the transmitted energy via the antenna with the reflected energy and will consequently adjust the energy to be transmitted by the antenna. At each solid-state RF energy source, the frequency, the wavelength, the phase versus time, the amplitude, the direction of radiation and/or the overall magnitude of the radiated power can be controlled individually and/or in groups. The antenna may function as a sensor, for example to detect the radiation reflected from the substance to be treated. With this information the control unit can determine to which spots in the substance more or less energy should be radiate such that, in case of preheating/precooking food substances, within certain tolerances, an equal temperature of all substances can be achieved by adjusting the signals to each solid-state RF energy source. In this way cold spots and hot spots in the food substance, typical to an oven wherein microwaves are generated by a magnetron, will be avoided. Multiple antennas can be provided in order to increase the effectiveness of the control system and the antennas can be positioned in different planes and/or positions along the movement path of the food substances.

In a further embodiment of the invention the energy absorbed by the substance can be measured (absorption measurement) and via an algorithm can be detected what the doneness of the food substance is, in what stage the cooking process is and this will be the base to determine to finish the cooking process to reduce/prevent cooking losses and to prevent that the food substances will be overcooked.

**Figure 13a** depicts the embodiment of **Figure 11** extended with measurement means M such as solid-state RF sources to measure the doneness and/or status of the food substances between individual heat treatments. Preferably the doneness measurement will be the base for controlling the previous and/or following heat treatment processes.

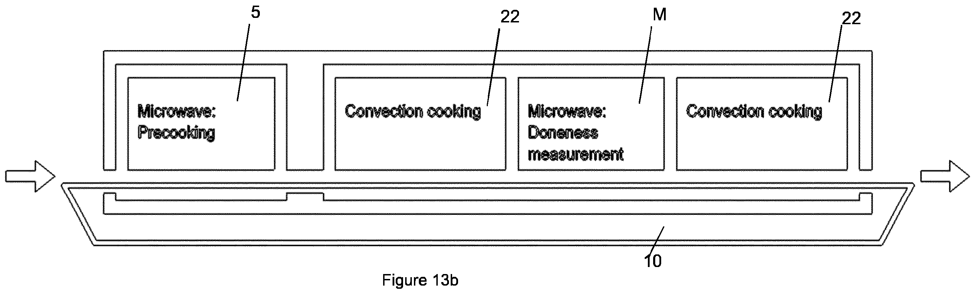

**Figure 13b** depicts a, preferably linear, oven with a first zone to precook food substances with microwaves generated by solid-state RF energy sources and a second zone for convection cooking. Compare to the embodiment in **Figure 12** a measurement zone is arranged in or after the second zone wherein for instance solid-state RF energy sources are provided in order to measure the doneness of the food substances. Preferably, the humidity in this area is such that a reliable measurement can take place. After or during measurement of the doneness, final cooking of the food substances will take place and cooking parameters will be via the control unit based on measurements done in the measurement zone.

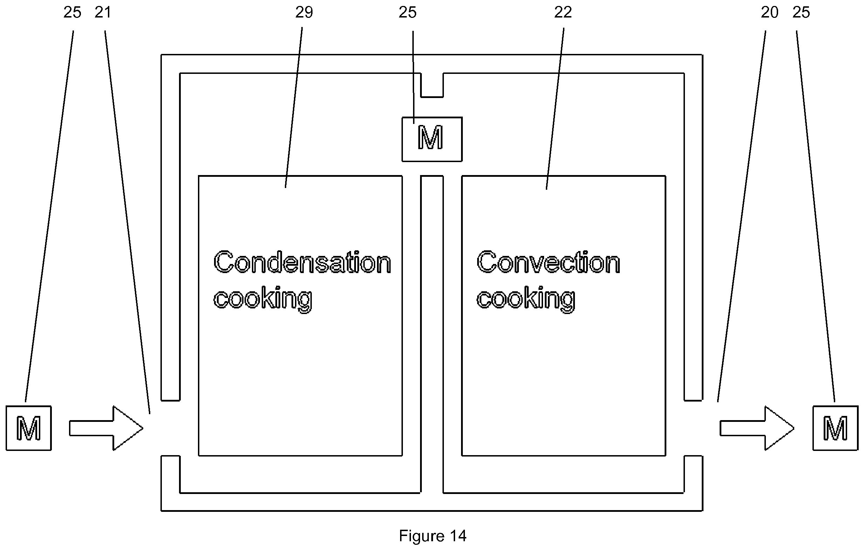

**Figure 14** depicts an embodiment of a two chamber/zone spiral cooking oven as known in the field such as the GEA CookStar wherein in the first zone the food substances will be heated with condensation cooking and in a second zone the food substances will be finally cooked by convection cooking. Such cooking process will be used for instance for cooking uncooked chicken pieces. Preferably, measurement means M such as microwave solid-state RF sources are provided between both zones, not for heating up the food substances, but to be able to measure the doneness and/or the status after heat treatment in the first cooking chamber/zone. Preferably, the climate in the measurement zone is such that a reliable measurement can take place. Further measurement means M such as solid-state RF sources 2 are preferably provided before the entrance 21 of the oven and after the outlet 20 of the oven. In a more preferred embodiment also measurement means such as solid-state RF sources 2 are provided within zone one and within zone two. The feedback of all the measurement means will be used to control the heat treatment processes. This embodiment is not limited to condensation cooking in the first zone but the combination of condensation and convection cooking and an eventual additional impingement zone is applicable too.

In one embodiment detection means 25 such as a camera can be provided to be able to detect/identify the position and/or type and/or volume and/or color of the food substance/mass. Therefor the detection means is preferably positioned at the entrance of the apparatus. Further downstream in the apparatus detection means can be provided to detect/identify the status of the heating process and as a result of the images the control unit can adjust the heating process. More preferably the detection means and relating software will be used able to handle conveyor means with multiple lines with substances but also be able to handle conveyor means with random oriented food substances. The control unit is able to determine at which time which energy source will be activated based on amongst others the speed of the conveyor 10. In case for instance the volume and type of the food substances is determined the control unit is able to calculate the heat treatment process parameters.

For all above mentioned embodiments, a control system can be provided to be able to introduce pre-programmed cooking menus/recipes. Basic parameters for the menus/recipes are for instance belt load and/or speed of the conveyor means. Input parameters in the cooking menu/recipe based on cooking with microwaves are for instance temperature of the substance, size of the food substance, weight substance, moisture content substance and food type. With the set of parameters, the control unit can determine the cooking parameters such as temperature and time and is able to (pre)heat/((pre)cook the food substances. However, manually input of these cooking parameters will also be possible and within certain ranges the control can optimize the manual inputted values depending on the substance parameters and the running cooking process.

In case of a combination oven input parameters will also be related to other heat sources. For instance in a combination oven comprising solid-state RF energy sources and convection cooking means, input parameters such as temperature hot air, humidity, fan speed, flowrate process fluid, time and pressure can also be part of the cooking menu.

Final cooking of food substances with only microwaves can result in an undesired texture, taste/bite, moisture content, appearance and color. In a first embodiment of the invention use is made of the advantages of microwaves combined with the advantages of heat treatment processes such as frying and/or cooking. The food substance such as meat and fish will be preheated/precooked with microwaves before the next heat treatment processing step such as frying and/or cooking.

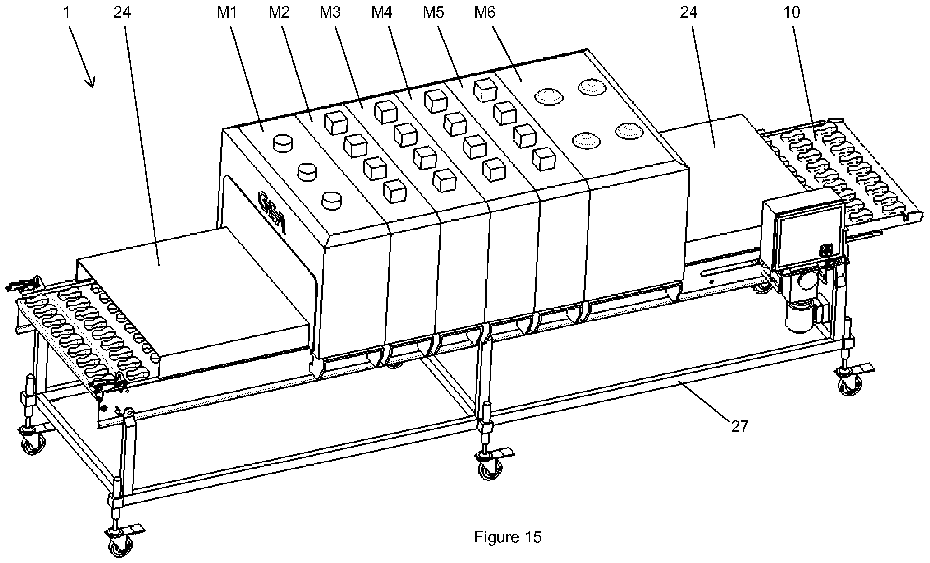

In **Figure 15** a modular designed apparatus 1 designed to use in a continuous production line comprises multiple modules, in this embodiment six, depicted as M1-M6 and preferably connected to each other to form a single structure, here a tunnel wherethrough the substances to be treated are conveyed by conveyor 10, which preferably moves continuously. The speed of the conveyor belt is preferably provided as data to a control unit to control the treatment processes in modules M1 - M6 accordingly. M1 is the module most upstream module and M6 is the most downstream module, relative to the direction of motion of the substances to be treated. Advantage of such a modular design can be that in each and every module a separate process application with unique settings can takes place. In another embodiment in multiple modules the same application can take place. One of the applications is a treatment with microwaves generated by solid-state energy sources. This modular design results in reduction of costs and an increased flexibility regarding process applications.

In this embodiment formed meat substances such as burgers, nuggets, chicken wings or a food mass will be heated. Shielding means 24 can positioned at the inlet of module M1 and/or at the outlet of module M6 to prevent microwaves from coming out of the apparatus. Module M1 is here provided with sensor means in order to determine the presence of substances on the conveyor 10. This information can be used in module M2 to determine when the heating process should be started. Both modules M2 and M3 hear comprise solid-state RF energy sources. In module M4 absorption measurements can be done to determine if the meat substances are equal heated. In module M5 further heating will be provided to the substances but preferably only were need according the measurements in module M4; i.e. substances are individually whose temperature is too low. Module M6 can, for example, be provided with infrared heating means, particularly for boneless and flat shaped products, in order to establish browning and/or a crispy outer layer. In a more preferred embodiment the sensing means in M1 can determine the dimensions, shape and/or volume and/or weight of the food substance. This data can be utilized in a control unit to calculate and control an individual heating process for each and every single food substance on belt 10 or for a row and/or column of substances on the belt.

The modules M1-M6 are preferably provided on a frame 27, more preferably on the frame of the conveyor means 10. Preferably, the sequence of the modules M1 - M6 can be changed. Each module M1-M6 and the conveyor means are preferably connected to the same control system.

The conveyor means 10, are preferably designed such that they are at least partially, preferably entirely transparent for the microwave radiation.

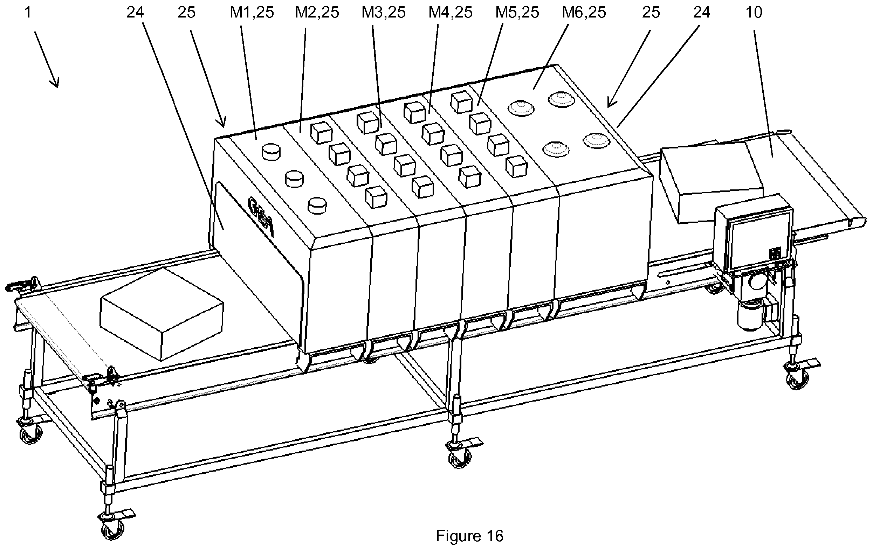

In **Figure 16** a modular designed apparatus 1 comprises multiple modules designed to use in batch production: i.e. the conveyor belt 10 moves intermittently. Reference is made to the description according to the embodiment of Figure 15, which at least partially also apply to the embodiment according to Figure 15. In this embodiment 6 modules depicted as M1-M6 can be used and connected to each other. A substance will be subjected to a first treatment in module M1 and when this treatment is finished a next treatment in module M2 followed by treatments in other modules M3-M6 can take place. The through opening, preferably the entire through opening above the conveyor belt 10 and between two adjacent modules can be provided with shielding means (not shown) in order to prevent that a treatment in one of the modules will influence the treatment in a neighboring module. Additionally or alternatively such shielding means can be provided at the inlet of module M1 and/or at the outlet of the module M6, for example to prevent microwaves from coming out of the apparatus. In this embodiment module M1 can provided with a sensor, for example detection means 25 such as a camera system to detect what kind of substance is positioned at which location on the belt. This information preferably comprises the area of the substance parallel to the conveyor, the height of the substance and/or its density and/or weight. In case the thickness changes, local thicknesses can be determined. This information can be used to adjust and/or control the treatment process in the following modules M2-M6. In module M2 absorption measurements can be done, for example to determine the temperature of one or more substances on the belt. It is determined for example, if the temperature of the substances is equal and/or the temperature distribution of each substance. The temperature reading can be used to control the subsequent treatment step(s). In module M3 the meat substances can be heated with solid-state RF energy sources to a predetermined temperature. In module M4 absorption measurements can be done to determine if the mutually heated substances are all in the same temperature range. In module M5 further heating can be provided to the substances, were need according the measurements in module M4. Module M6 is an optional additional shielding module to prevent microwaves from coming out of the inventive apparatus. In case the processes in all modules are finished the respective shielding means can be altered, for example tilted such that the substances can move from one module to another. As soon as the substances are shifted to the next module, shielding means can close again.

Regarding **Figures 15** **and** **16** but also as a general teaching, a desired distribution of the RF-energy over the width of the conveyor means is preferred. The inventive processing apparatus therefore may comprise a multitude of solid state RF energy sources along one line and/or one plane, which is at least essentially perpendicular to the transportation direction of the conveyor belt. Each of these sources can preferably be controlled individually. The energy distribution over the width may be evenly or according to a desired pattern. The energy distribution over the width can be set according to the local load of substances on the belt.

### Examples:

### Example 1

Reference is particularly made to the embodiments according to **Figures 15** **and** **16** and the other examples. Over the width of a, preferably continuously, running conveyor means 10 multiple substances are positioned side by side. The temperature of these substances shall be equalized and/or raised over the width of the conveyor means 10. This is preferably accomplished by absorption of microwave radiation provided by a solid-state RF energy source. The absorption of the microwave radiation is preferably measured for each substance individually and/or for a certain range of the width of the conveyor means. If needed the temperature of one or more substances which is, for example, too low is adjust/increase by directing microwaves generated by a solid-state RF power amplifier to the substance which has the low temperature.

Via the antenna 17 microwaves are radiate to the substances to be heated and ingredients such as water and fat will absorb the energy. Simultaneously that part of radiation what is not absorbed by the ingredients in the substance will be absorbed by the antenna and the measured absorption will be used to control the solid-state RF energy sources.

Depending on the width of the belt and the number of substances positioned on the belt two or more solid-state elements and antennas will be used in order to increase accuracy of the process.

### Example 2

Reference is particularly made to the embodiments according to **Figures 15** **and** **16** and the other examples. In the present case, pre-heated food substances are transported on a preferably continuously, running conveyor means, preferably a belt, before these substances enter a further heat treatment process such as frying or cooking. In a fryer or cooking oven the heat/energy enters the food substance from the outside and is then transported by conduction and consequently it takes a while before the desired core temperature is reached.

By pre-heating food substances with microwaves generated by solid-state energy sources the entire substance volume will be, within certain tolerances, heated at once and hot- and/or cold-spots can be avoided due to control of radiation based on absorption measurement. All substances along the width of the conveyor means have at least essentially the same temperature.

Result will be that the fryer or cooking oven can run with a higher line speed (less residence time substance in fryer or oven) or less heating capacity in the fryer or oven is needed resulting in energy-saving.

This is a typical line application in which the inventive apparatus is combined with another apparatus, for example a fryer and/or a cooking oven. The solid state RF energy source can be provided up- and/or downstream from the other apparatus in the line.

### Example 3

Reference is particularly made to the embodiments according to **Figures 15** **and** **16** and the other examples. In the present case, heat treated substances, for example cooked and/or fried food substances, are transported on a preferably continuously, running conveyor means, preferably a belt. Measuring the doneness, e.g. the core temperature of these substances, after treatment in the heat treatment application such as cooking. By measuring the doneness by means of an absorption measurement it can be determined if the substances are for instance fully cooked. If not, the measurement can be taken to apply the correct amount of microwave energy. The measurement of the absorption is preferably done by means of the antenna 17.

In above embodiments microwaves generated by solid-state RF energy sources are deployed to preheat, precook and/or dry food and feed substances before these substances are subjected to a next or final heat treatment step within a further processing line.

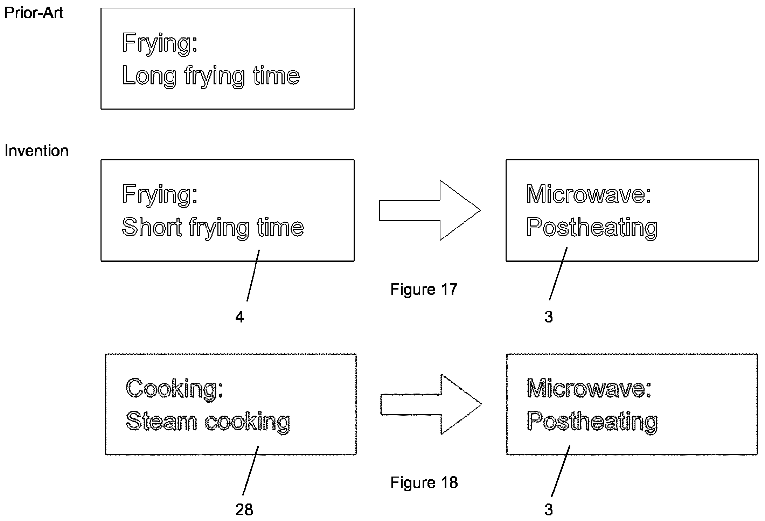

In different, following embodiments microwaves generated by solid-state RF energy sources will be deployed after a previous heating, cooking and/or drying treatment. However, for the following examples, reference is also made to the explanations according to Figures 1 - 16. The disclosure made regarding Figures 17 - 23 also applies to the previous Figures.

**Figure 17** depicts a frying application wherein food substances first will be par-fried followed by a microwave post-heating step with solid-state RF energy sources. Nowadays partial frying is a common procedure to prevent food substances being too fat and will have too much calories. The substances will be fried for the shorter period of time in comparison to deep frying wherein the food substance is submerged in the frying oil until it is entirely cooked.

In case of a coated substance during par-frying the core of the substance will remain unaffected e.g. un- or only little heated and/or no or little oil-absorption. Due to dehydration of the surface the Maillard reaction creates a golden brown exterior of the food substance. This dehydration will settle the coating; it forms a, preferably crispy, crust, an essentially closed layer which prevents or limits oil absorption and prevents loss of moisture/natural juices further downstream.

A par-fried food substance is not fully cooked and will be directly frozen after frying or the whole substance be fully cooked in a line or spiral oven or in this embodiment by microwaves generated by solid-state RF energy sources.

In case of steam cooking, e.g. condensation cooking of uncoated food substances, such as fillets, the substances can be treated with microwaves generated by solid-state RF energy sources either before or after the steam cooking process. The combination of both processes will have the benefits of steam cooking (retaining of nutrients without dried out food substances) and microwave, which can a fast process. **Figure 18** depicts a steam cooking process wherein the outside of the food substance will be sealed. To prevent loss of moisture by subjecting the food substances too long to high temperatures, a microwave post-heating/post-cooking process will be a subsequent processing step. Microwaves will not color the food products.

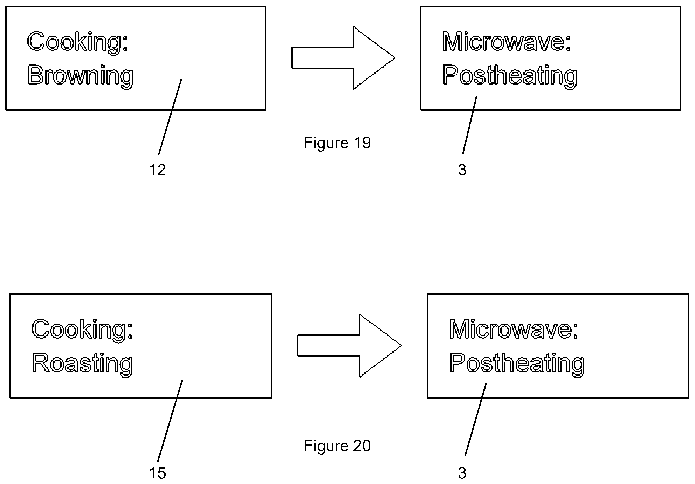

**Figure 19** depicts a process wherein fist a substance will be colored/browned in an oven and subsequently will be post-heated with microwaves generated by solid-state RF energy sources.

In **Figure 20** first the food substances comprising a bone-structure for instance wings or drumsticks e.g. from a chicken are roasted in an oven to obtain a crispy skin. Hot air can settle the coating and an essentially closed layer/crust with an attractive outside color can result. The cooking process will be followed by post-heating with microwaves generated by solid-state RF energy sources.

In case of cooking substances comprising a bone structure in an oven the meat is relatively quickly cooked and colored, preferably with hot air with a predetermined humidity via the outside of the product, however the bone itself is not heated or not sufficiently heated. Due to safety reasons (reduction of bacteria to a safe level) the bone temperature needs to be above a minimum temperature, for instance 84°C, much higher than the core temperature of the meat should be. In traditional cooking applications the cooking process will be proceeded until the bone temperature has reached the desired correct temperature. However, the substances remain a relatively long period within the cooking oven which results in cooking losses such as the loss of water, other juices, fat and salts.

In the examples according to Figures **19** and **20** the meat substance can for instance be cooked in one and/or multiple zones until the temperature of the meat is not necessarily but preferably according to a minimum required temperature and/or a desired final core temperature is for instance 72°C, for example in order to kill bacteria. In case the final core temperature has been reached the coloring, juiciness and crispness will be as desired but the temperature of the bone structure is still lower as it should be.

In an embodiment of the process cooked substances will exit the oven at a temperature below the desired meat temperature and/or below the desired bone-structure-temperature. In the next processing step microwaves generated by solid-state RF energy sources can be applied to further heat the meat and bone structure for instance from 65°C to 84°C. Preferably the meat temperature (core temperature) will be heated from 65°C to the desired temperature, for instance 72°C and preferably the bone structure will be heated to the desired temperature, for instance 84°C.

In another embodiment of the process the substances will exit the oven with the desired meat temperature, for instance 72°C and in the next processing step microwaves generated by solid-state RF energy sources can be applied to further heat the bone structure till the desired temperature, for instance 84°C. The food substances are subjected to a relatively short cooking time in the oven.

Simultaneously or in a next processing step the solid-state energy sources can be applied to measure the temperature of the meat and/or bone-structure of the multiple food substances for example on a conveyor and in case the meat temperature or the temperature of the bone structure of the preferably individual food substances is not according the desired temperature further heating of the meat and/or bone structure of the preferably individual food substances will be applied. Correcting the temperature of a meat substance with microwaves after the cooking oven gives the opportunity to heat the food substance within the oven just until the desired temperature which results in less cooking losses and increased energy efficiency.

Preferably, at least one solid state RF energy source will be controlled such, that it specifically heats the bone structure and/or its surrounding meat. The frequency, the amplitude, the frequency, the wavelength, the phase versus time and/or direction of radiation and/or the radiation energy emitted by the solid state RF energy source can be controlled such that the microwaves is specifically absorbed by the bone and/or the surrounding meat, particularly the meat that has not yet reached the desired temperature. The temperature of the bone and/or the surrounding meat is preferably monitored and the emission of the solid state RF energy source is preferably adapted.

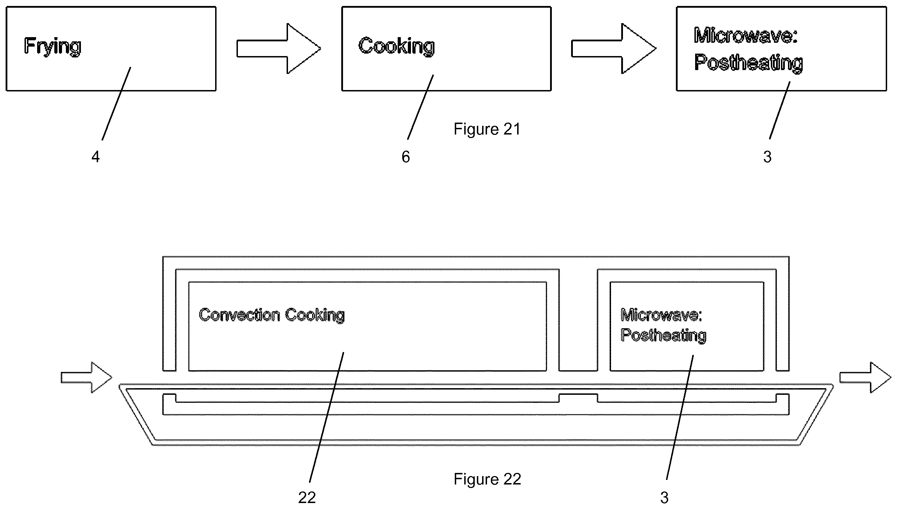

**Figure 21** depicts a processing line comprising frying, preferably par-frying, a cooking step for example with steam, followed by post-heating with microwaves generated by solid-state RF energy sources. In **Figure 22** in a first zone preferably after a short time period of condensation cooking the products will be subjected to convection cooking and thereafter post-heating with microwaves.

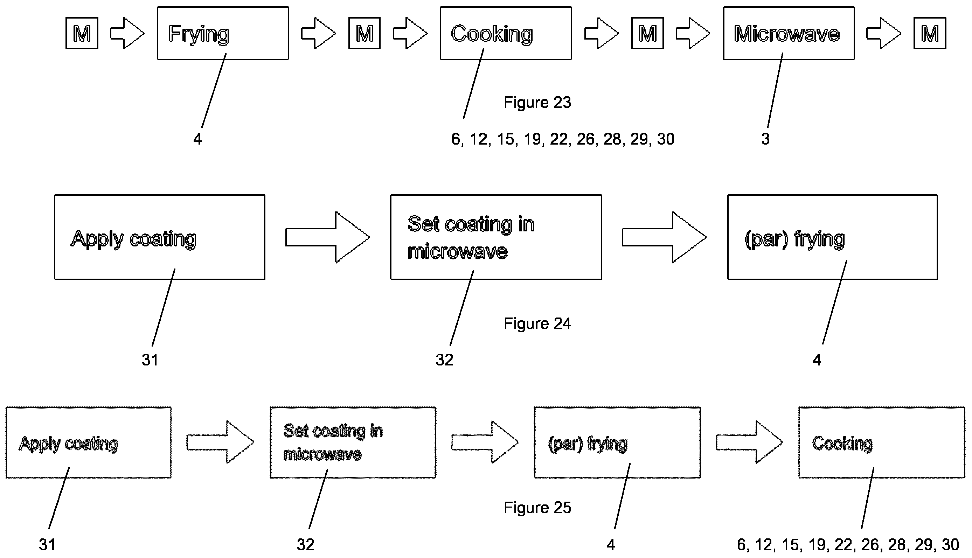

In **Figure 23** measurement means M such as solid-state RF sources are introduced to measure the doneness and/or status of the food substances between individual heat treatments. Preferably the doneness measurement will be the base for controlling the previous and/or following heat treatment processes. Measurement means M will not necessarily but preferably positioned before/after and between each and every heat treatment process and in an even more preferable embodiment within/during each and every heat treatment process. The measurement of the doneness preferably includes the measurement of a bone structure, in case the substance comprises a bone structure.

Besides preheating, precooking, drying, post-heating and post-cooking microwaves generated by solid-state RF energy sources can also be applied further upstream, preferably before the substances entering a further processing line or at least before the substances will be subjected to heat treatment within the further processing line. Aim is to heat the bone structure and/or, depending on the application, combined with limit heating of the meat.

In a traditional process of processing substances comprising a bone-structure, for instance coated drumsticks or coated chicken wings, first the coating will be applied, then the substance will be par-fried such that the coating will be settled and in a next step the substance will be finally cooked in an oven. However, when dealing in particular with frozen young chickens/broilers the surface of the bone and adjacent muscle tissues can become colored after cooking due to leakage of bone marrow.

The chickens we eat today are between six and eight weeks old and have under developed more porous bones than older chickens. When young chickens/broilers are frozen liquids in the mass of chicken including bone marrow will expand. The bone marrow inside of chicken bones is purplish and can permeate through the porous chicken bones as it expands and forms ice crystals. These ice crystals further break down the bone structure. When heating/cooking the purple marrow in the bones seep through the porous bones and leaks into the meat. The surface of the bones and the adjacent meat become deep red/purple or even black.

In an embodiment of the invention the leakage of bone marrow can be stopped by coagulate the marrow within the bones by using microwaves generated by solid-state RF energy sources. The temperature will preferably be in the range of 50°C till 80°C, more preferably 50°C till 70°C. The settings such as power level, frequency, wavelength, phase versus time, amplitude, magnitude of radiated power and/or direction of radiation will be optimized to penetrate the chicken meat, bone structure and to treat bone marrow. The treatment of substances comprising a bone-structure with microwaves will be applied before the substances are subjected to a heat treatment process such as frying and cooking, preferably the treatment will be applied before the fresh chicken bone-structure containing substances will be frozen. The process to minimize/stop leakage of marrow is not limited to chicken bone-structure comprising substances but is also applicable for other bone-structure containing substances such as beef, lamb, pork, poultry in general. The status of coagulation of proteins and starch will be determined by absorption measurements with solid-state RF energy sources. The status can be determined by comparing the measured results with the known and in the control system implemented absorption curve of both non-coagulated proteins and starch and entirely coagulated proteins and starch.

Particularly regarding **Figure 24****,** in prior art applications with coating, preferably crumb coatings and particular with fine flour coatings many particles will loosen from the food product and enter the oil bath. The result is loss of coating material and food material and despite filtering the frying oil the lost material results in degradation of the frying oil and consequently in decrease of the shelf life of the oil.

This problem is solved with the embodiment according to **Figure 24****,** which depicts an embodiment wherein solid-state RF energy source(s) is/are applied between the coating 31 and frying 4. In an embodiment of the invention the batter will be stabilized in order to improve the binding of the coating (flour, crumbs, etcetera) to the food product. Preferably the coating is set, stabilized and/or improved by a treatment 32 with solid-state RF energy sources, preferably by introducing the correct settings such as frequency, phase versus time and/or amplitude. In the present example, the food products enter the preferably continuous fryer. Due to the already set coating less coating material and food material will be lost inside the fryer resulting in the increase of the operating time of the frying oil. By (par) frying the products will become the correct taste, smell and color. In case the surface and/or core temperature of the products are increased by microwaves the frying process can be shortened.

**Figure 25** is similar to **Figure 24** with the difference that (par) frying will be followed by cooking. Reference is made to the disclosure according to Figure 24.

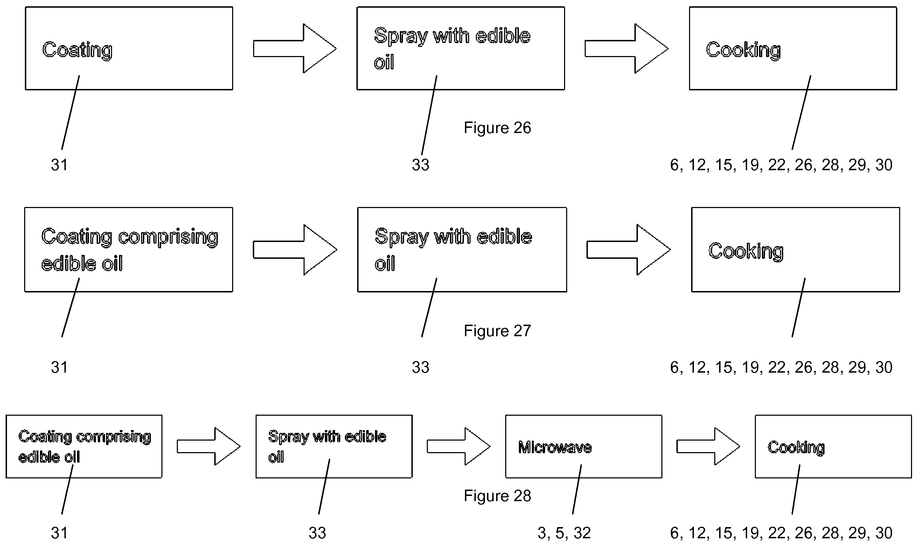

**Figure 26** shows an embodiment of a continuous processing line comprising a coating step 31 followed by a step wherein the surface of food products will be provided with edible oil 31 by spraying oil on the product surface. Curtains of oil flowing over the product or creating a mist of oil around the product can also be seen as spraying. By spraying oil less mechanical impact will be subjected to the food products compare to a continuous fryer and the coating will remain intact. In a next treatment the products will be cooked in an oven, preferably by convection or impingement the coating will be set. To prevent differentiation between the upper part and bottom part of the food product heat treatment such as condensation and/or convection and/or impingement will preferably take place from above and from below the product.

Regarding **Figure 27****,** in the state of the art the food products will be coated with a coating comprising edible oil and thereafter cooked without being fried in a fryer. In a multiple zone oven the products will be subjected shortly to condensation cooking and for a longer time period to convection cooking within a first zone in order to set the coating. In a second zone the products will be colored/browned. The results such as a crispy outer layer, taste and browning of the final products depends mainly on the content of oil within the coating. Field experience learns that oil content in the currently available coatings is often critical low. To improve this more oil should be supplied to the food product. **Figure 27** depicts an improved embodiment wherein products provided with a coating 31 comprising edible oil first will be sprayed with oil 33 and finally will be cooked in an oven. To prevent differentiation between the upper part and the bottom part of the food product the spray unit should not only spray additional oil from above but also from the sides and from below the food product.

Solid-state RF energy sources to generate microwaves are implemented in the embodiment of **Figure 27** as depicted in **Figure 28****.** Microwaves can be applied to preheat/precook 5 the products and/or to set the coating 32, preferably fast. A suitable position of solid-state RF energy sources will results in a correct treatment of the side parts and bottom part of the food product. The method depicted in **Figure 26** can also be followed by Solid-state RF energy sources to generate microwaves

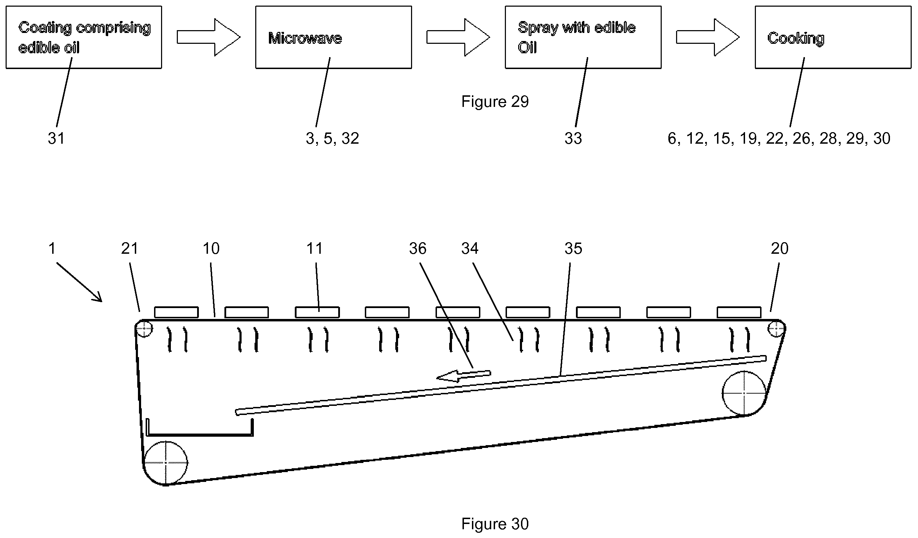

In **Figure 29** the treatment steps are reversed such that products coated with a coating comprising oil 31 will first be treated by microwaves generated by solid-state RF energy sources, for instance preheated/precooked 5 and/or the coating will be set 32. After this treatment the products will be sprayed with edible oil 33 followed by cooking. **Figure 30** depicts the inside of a microwave processing apparatus 1 able to treat food products with microwaves generated by solid-state RF energy sources. Food products 11 enter the apparatus at inlet 21 and leave the apparatus at outlet 20. As a result of heat treatment with microwaves, moisture 34 will be released from the food products, to prevent a wet bottom side of food products this released moisture must be able to escape and therefor conveyor belt 10 should be open, for example provided as chains or a mesh. Air flow 36 can be introduced in order to force the removal of moisture. Drip collection means 35 can collect and discharge the released moisture. Openness and material of conveyor belt 10 should be such that the conveyor structure and material will not influence the heating process and/or absorption measurement.

This embodiment is not limited to non-coated food products but is also applicable for all kind of coated products.

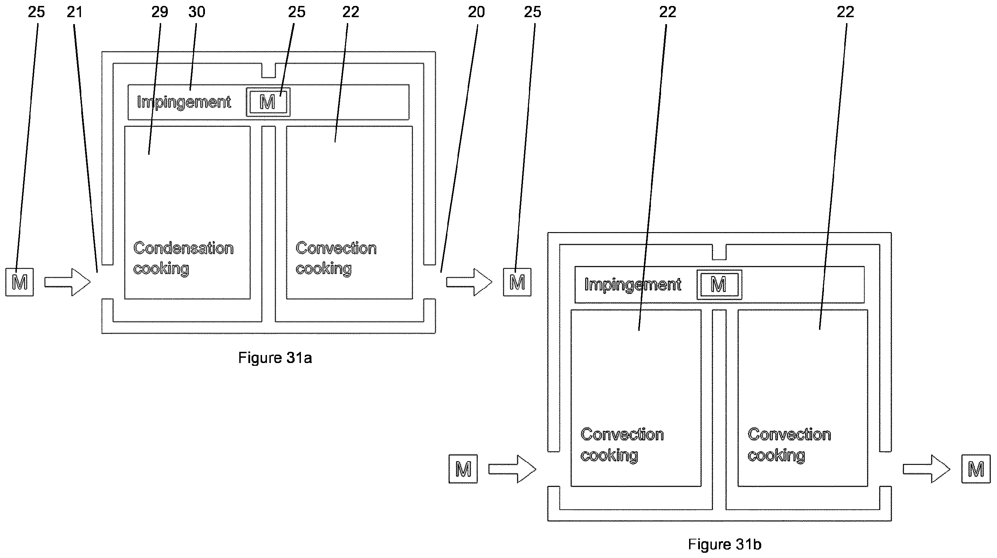

Regarding **Figure 31a, b****,** linear ovens or spiral cooking ovens known from the state of the art comprising a first chamber/zone 29 with a linear or spirally-wound belt, preferably a second impingement zone 30 and a third chamber/zone 22 with a linear or spirally-wound belt. Products, such as meat products, will first be treated in the first zone 29 depending on the product to be treated with condensation cooking or condensation/convection cooking. During condensation cooking moisture and free water will condense on the surface of the food product resulting in a phase change of the steam resulting in energy delivered to the surface of the product. The temperature difference between surface temperature and core temperature is at the start of the process relatively large and the heat will transfer from the surface to the core preferably by conduction.

At a certain moment, when wet bulb temperature is reached, the rise of temperature stops/stalls despite supplying energy to the meat products. This temperature stall is the point when the product temperature has reached the wet bulb temperature and is caused by evaporative cooling. The time period of the stall is determined by the free moisture from the meat and from the marinade in case the product is marinated. This free moisture is evaporating from the pores and cells and consequently cools down the meat. As the temperature of cold meat rises, the evaporation rate increases unit the cooling effect balances the heat input. The stall stops when "unbound free water" from the surface and just below is released.

The cooking process will be continued in the oven in preferably an impingement zone with high air temperature directed with high speed to the surface of the product succeeded by a convection zone with increased temperature to for instance brown the products. During cooking both the surface and core temperature will follow a line. During the stall this line slopes down and after the stall the line follows the original curve. The thermal conductivity of the food product determines how quickly the temperature difference between surface and core can be reduced, this parameter cannot be changed.

**Figure 31a** depicts a double spiral oven known from the state in the art however extended with optional measurement means M. **Figure 31b** is a similar embodiment as **Figure 31a** with the difference that this embodiment is particularly directed to the use of coatings comprising oil. In a first zone mainly convection cooking will take place, in an optional second zone the products will be subjected to impingement and in a third zone convection cooking to color/brown the products. The measurement means measure the temperature of the product prior to entering the oven and/or after the first zone and/or at the exit of the oven. Based on at least one of these measurements, a controller can adjust the temperature and/or humidity and/or steam- and/or fresh air injection into the oven.

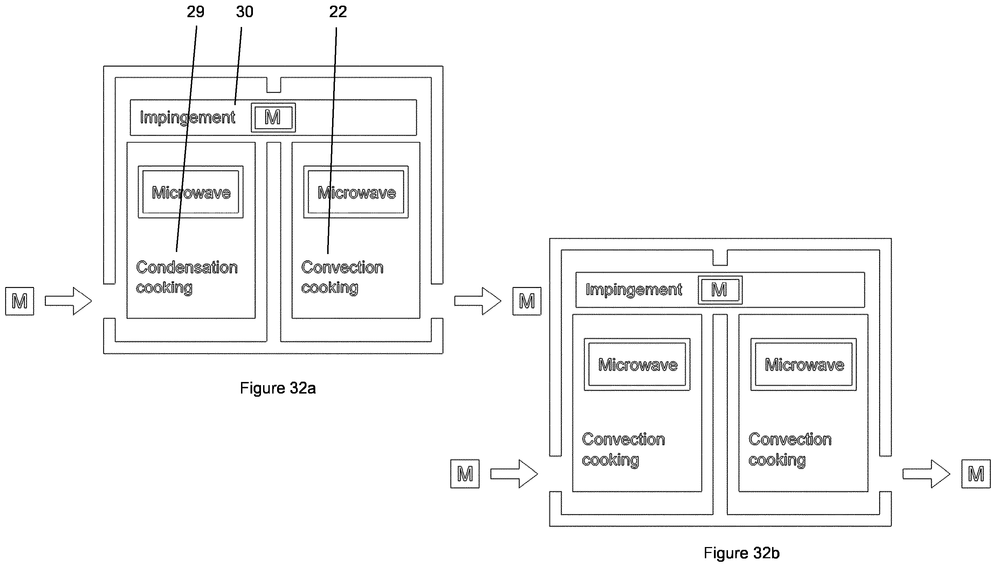

Regarding **Figure 32a, b****,** in an embodiment of the invention the products are subjected to microwaves generated by solid state RF energy sources before the products enter the cooking oven. Microwaves heat up the product homogenously and the core temperature rises relatively fast with less temperature difference between surface and core. The surface and core temperature of the food product are influenced without being restricted by the thermal conductivity product parameter. The products will enter the cooking oven with a higher surface temperature and particular a higher core temperature, consequently while the surface temperature will be reached sooner the time period of condensation cooking with steam will be shorter and advantageously less free water will be at the products.

Less free water will decrease the period of the evaporative cooling and a shorter period of stall thereby increasing the (energy) efficiency of the cooking process.

In another embodiment of the invention depicted by **Figure 32a** no preheating with microwaves generated by solid-state RF energy sources will take place. In the first zone 29 food products will be subjected mainly to condensation cooking. In a second optional zone the food products will be subjected to impingement 30 with high air temperature directed with high speed to the surface of the product. In a third zone 22 the products will be subjected to convection cooking to achieve the correct crispness and to brown the products to the correct color.

Solid-state RF energy sources will be positioned within the oven to be able to direct microwaves to the food products. These energy sources can be positioned just after the products enter the oven to be able to increase the surface temperature and/or the core temperature at an early stage, and/or somewhat further in the oven to boost mainly the core temperature of the food products.

In a different embodiment these energy sources will be positioned, preferably alternatively or additionally, just after the location in the oven where the stall is reached. Microwaves will then increase the core temperature of the product.

In a further embodiment energy sources will be positioned, preferably alternatively or additionally, in for instance in the second and/or third zone. Multiple solid-state RF energy sources can be positioned in different locations within the oven to be used for different tasks and/or combinations of tasks. Applying microwaves directed by solid-state RF energy sources will shorten cooking time and/or increase the oven capacity.

**Figure 32b** is a similar embodiment as **Figure 32a** with the difference that this embodiment is particularly directed to the use of coating comprising oil. In a first zone mainly convection cooking will take place, in an optional second zone the products will be subjected to impingement and in a third zone convection cooking to color the products.

In a further embodiment condensation cooking respectively convection cooking will be applied to heat the food product from the outside to the inside and will be combined with microwaves generated by solid-state RF energy sources mainly to boost the core of the food product.

The described use of solid-state RF energy sources is also applicable to a spiral oven consisting of one zone and a linear oven consisting of one or multiple zones.

For all applications described in this document the combination of multiple frequencies can be applied. For instance a low frequency of approximately 915 MHz for heating up thicker blocks of food mass between surface and core of the product and a higher frequency to direct heat only to the outside surface of the food product. Multiple frequencies can be generated by one solid-state RF energy source but preferably generated by multiple solid-state RF energy sources wherein each and every solid-state energy source will generate a certain programmed frequency. Preferably solid-state RF energy sources generating different frequencies are within the heating apparatus located in different product chambers.

A step with a higher frequency than 2450 MHz generated with solid-state RF energy sources, preferably between 3GHz and 300GHz, can be directed to the outside of the product. Less penetration depth will only dehydrate the surface of the food product to create a Maillard reaction resulting in a golden brown exterior of the food substance. Preferably the browning will take place over the entire surface area of the product, therefor one or more energy sources will be used. The control unit will adjust the phase change in order to achieve a controlled browning around the entire surface.

For instance a bone-in product as drumsticks can be treated with a frequency of 2450 MHz to heat up the product between the surface and core of the product and a higher frequency only directed to the surface of the product in order to create a Maillard reaction.

The processes described above are not limited to meat substances but are also applicable for fish, vegetarian substances, vegetables, pet food, etcetera.

The processes described above are not limited to a process step with microwaves generated by solid-state RF energy sources before a fryer and/or cooking oven or a process step with microwaves generated by solid-state RF energy sources after a fryer and/or cooking oven. The combination of a process step with microwaves generated by solid-state RF energy sources before and after a fryer and/or cooking oven and/or another heat treatment process is also applicable.

The use of measurement means and/or the combination of measurement means such as absorption measurement by solid-state sources, doneness measurement by using solid-state sources and detection means 25 such as cameras are not limited to one of the Figures above.

For all embodiments and all examples provided above measuring/detection means 25, such as cameras, can be provided to be able to detect/identify the position and/or type and/or shape and/or weight and/or volume and/or density and/or dimensions and/or color of the food product/mass.

Measuring/detection means such as cameras can be provided in order to detect/identify the belt load and the position and variation of products/mass.

Measuring/detection means such as thermal imaging cameras can be used in order to control the temperature within the process. These measurements are non-contact temperature measurements and can be used to measure the doneness / if food products are well cooked as well as in an oven as in the microwave.

The measuring/detection means such as cameras can be positioned before/at the entrance of a heat treatment process such as an oven in order to be able to adjust the parameters of the cooking process, the cameras can be positioned further downstream for instance in an oven to detect/identify the status of the process and successively the information can be used by the control unit to adjust relative parameters. The measuring/detection means can be positioned after the for instance heat treatment process in order to check if the products are well cooked. In a preferred embodiment the measuring/detection means such as cameras will be able to detect/identify relevant parameters of each and every food product such that particularly when using solid-state RF energy sources each and every food product can be treated separately. In case for instance the volume and type of the food substances is determined the control unit is able to calculate the heat treatment process parameters.

The measuring/detection means such as cameras will be used able to handle conveyor means with multiple lines with substances but also be able to handle conveyor means with random oriented food substances. When using solid-state RF energy sources the control unit is able to determine at which time which energy source will be activated based on amongst others the speed of the conveyor.

### List of reference signs

- 1: processing apparatus, microwave apparatus, heat treatment apparatus
- 2: solid-state RF energy source
- 3: solid-state RF energy source microwave heating
- 4: frying
- 5: solid-state RF energy source microwave heating precooking/preheating
- 6: cooking final cooking
- 7: solid-state RF energy source microwave heating drying
- 8: housing
- 9: inner wall housing 8
- 10: conveyor means, conveyor, conveyor belt
- 11: product, food product, substance
- 12: browning
- 13: solid-state RF energy source microwave drying
- 14: product chamber, cooking chamber
- 15: roasting
- 16: waveguide
- 17: antenna
- 18: cooling chamber
- 19: smoking
- 20: outlet, exit
- 21: inlet
- 22: convection cooking
- 23: microwave transparent shielding means
- 24: shielding means
- 25: detection means, camera
- 26: radiation treatment, grilling, infrared treatment
- 27: frame
- 28: steam cooking
- 29: condensation cooking
- 30: impingement
- 31: coating
- 32: solid-state RF energy source microwave to set coating
- 33: spray with edible oil, curtains of edible oil, mist of edible oil
- 34: drip, moisture
- 35: drip collection means

- 36: air flow
- M: measurement means, doneness measurement, microwave doneness measurement
- M1-6: modules

## Claims

1. Line (1) for cooking a substance with an apparatus comprising a multitude of solid-state radio frequency source(s) (6) and a further heat treatment apparatus (4, 6, 12, 15, 19, 22, 26), wherein each solid-state radio frequency source(s) (6) comprises a RF power amplifier that drives the antenna of a transmitter, wherein the antenna also is a sensor that detects reflected energy and wherein the line comprises a control system which compares transmitted energy via the antenna with reflected energy and will consequently adjust the energy to be transmitted by the antenna.

2. Line (1) according to claim 1, **characterized in, that** the apparatus is connected by conveying means (10).

3. Line (1) according to claim 1 or 2, **characterized in, that** the solid-state radio frequency sources (6) are provided in an array of n columns and m rows, wherein n is an integer > 1 and m is an integer ≥ 1.

4. Line (1) according to claims 1 - 3, **characterized in, that** the sources (6) are provided equidistantly around the circumference of product chamber (14).

5. Line (1) according to claims 2 - 4, **characterized in, that** the columns extend around the conveyor belt.

6. Line (1) according to one of claims 2 - 5, **characterized in, that** at least the section in which the solid-state radio frequency source(s) (6) are provided, is shielded.

7. Line (1) according to one of the preceding claims, **characterized in, that**:
- a solid-state RF energy source microwave preheating step is followed by a frying-step or vice versa and/or
- a solid-state RF energy source microwave precooking step is followed by a cooking-step or vice versa and/or
- a solid-state RF energy source microwave drying step is followed by a browning-step or vice versa and/or
- solid-state RF energy source microwave drying step is followed by a roasting-step or vice versa and/or
- solid-state RF energy source microwave drying step is followed by a smoking-step or vice versa and/or
- a frying step is followed by a solid-state RF energy source microwave precooking step, which is followed by a browning and/or roasting and/or smoking and/or radiation step or in a different sequence and/or
- a solid-state RF energy source microwave batter stabilizing step is followed battering step
is provided.

8. Line (1) according to one of the preceding claims, **characterized in, that** solid-state RF energy source(s) and the convection cooking means are provided in one housing, preferably connected by conveyor means.

9. Line (1) according to one of the preceding claims, **characterized in, that** it comprises means (M) to measure the doneness.

10. Line (1) according to claim 9, **characterized in, that** measurement of the doneness is executed with the solid-state RF energy source.

11. Line (1) according to one of the preceding claims, wherein the substance comprises a bone-structure, **characterized in that** at least one solid-state radio frequency source (6) is controlled to specifically heat the bone-structure and/or the meat surrounding the bone-structure.

12. Method for cooking a substance with a line according to claims 1 - 11.

13. Method according to claims 12, **characterized in, that** parameters of the substance are inputted into a control system and that a control unit sets the parameters at least for the solid-state RF energy source microwave heating step accordingly.

14. Method according to claims 12 - 13, wherein the substance comprises a bone-structure, **characterized in that** the post heating is adapted to specifically heat the bone-structure.

15. Method according to claims 12 - 14, **characterized in, that** solid-state radio frequency source(s) (6) are utilized to measure the doneness of the substance.

## Patentansprüche

1. Zeile (1) zum Kochen einer Substanz mit einer Vorrichtung, die eine Vielzahl von festen Festkörper-Hochfrequenzquelle(n) (6) und eine weitere Wärmebehandlungsvorrichtung (4, 6, 12, 15, 19, 22, 26), wobei jede Festkörper-Hochfrequenzquelle(6) einen HF-Leistungsverstärker umfasst, der die Antenne eines Senders ansteuert, wobei die Antenne auch ein Sensor ist, der reflektierte Energie erfasst, und wobei die Leitung ein Steuersystem umfasst, das die über die Antenne gesendete Energie mit der reflektierten Energie vergleicht und daraufhin die von der Antenne zu sendende Energie anpasst.

2. Leitung (1) nach Anspruch 1, **dadurch gekennzeichnet, dass** die Vorrichtung durch Fördermittel (10) verbunden ist.

3. Zeile (1) gemäß Anspruch 1 oder 2, **dadurch gekennzeichnet, dass** die Festkörper-Funkfrequenzquellen (6) in einer Anordnung von n Spalten und m Zeilen vorgesehen sind, wobei n eine ganze Zahl > Frequenzquellen (6) in einer Anordnung aus n Spalten und m Zeilen vorgesehen sind, wobei n eine ganze Zahl > 1 und m eine ganze Zahl> 1 ist.

4. Leitung (1) gemäß den Ansprüchen 1 bis 3, **dadurch gekennzeichnet, dass** die Quellen (6) in gleichen Abständen um den Umfang der Produktkammer (14) angeordnet sind.

5. Zeile (1) gemäß den Ansprüchen 2 bis 4, **dadurch gekennzeichnet, dass** sich die Spalten um das Förderband herum erstrecken.

6. Zeile (1) gemäß einem der Ansprüche 2 bis 5, **dadurch gekennzeichnet, dass** zumindest der Abschnitt, in dem die Festkörper-Hochfrequenzquelle(n) (6) vorgesehen ist (sind), abgeschirmt ist.

7. Leitung (1) gemäß einem der vorstehenden Ansprüche, **dadurch gekennzeichnet, dass**
- auf einen Schritt zum Vorheizen mit einer Festkörper-HF-Energiequelle ein Frittier-Schritt folgt oder umgekehrt und/oder
- auf einen Vorheizschritt mit einer Festkörper-HF-Energiequelle folgt ein Kochschritt oder umgekehrt und/oder
- Ein Mikrowellentrocknungsschritt mit einer Festkörper-HF-Energiequelle wird durch einen Bräunungsschritt gefolgt oder umgekehrt und/oder
- auf einen Trocknungsschritt mit einer Festkörper-HF-Energiequelle und Mikrowellen folgt ein Röstschritt oder umgekehrt und/oder
- Festkörper-HF-Energiequelle-Mikrowellentrocknungsschritt gefolgt von einem Räucherschritt oder umgekehrt und/oder
- auf einen Frittier-Schritt folgt ein Vorbacken mit einer Festkörper-HF-Energiequelle, auf das ein Bräunungs- und/oder Röst- und/oder Räucherschritt und/oder ein Bestrahlungsschritt folgt oder in einer anderen Reihenfolge und/oder
- ein Festkörper-HF-Energiequelle-Mikrowellen-Teigstabilisierungsschritt folgt auf den Teigschritt
wird bereitgestellt.

8. Zeile (1) gemäß einem der vorstehenden Ansprüche, **dadurch gekennzeichnet, dass** die Festkörper-HF-Energiequelle(n) und die Konvektionskochvorrichtung in einem Gehäuse vorgesehen sind, das vorzugsweise durch eine Fördereinrichtung verbunden ist.

9. Zeile (1) gemäß einem der vorstehenden Ansprüche, **dadurch gekennzeichnet, dass** sie Mittel (M) zum Messen des Gargrades umfasst.

10. Zeile (1) gemäß Anspruch 9, **dadurch gekennzeichnet, dass** die Messung des Gargrades mit der Festkörper-HF-Energiequelle durchgeführt wird.

11. Zeile (1) gemäß einem der vorstehenden Ansprüche, wobei die Substanz eine Knochenstruktur umfasst, **dadurch gekennzeichnet, dass** mindestens eine Festkörper-Hochfrequenzquelle (6) so gesteuert wird, dass sie die Knochenstruktur und/oder das die Knochenstruktur umgebende Fleisch gezielt erwärmt.

12. Verfahren zum Garen einer Substanz mit einer Leitung gemäß den Ansprüchen 1 bis 11.

13. Verfahren nach Anspruch 12, **dadurch gekennzeichnet, dass** Parameter der Substanz in ein Steuersystem eingegeben werden und dass eine Steuereinheit die Parameter zumindest für den Mikrowellenheizschritt mit der Festkörper-HF-Energiequelle entsprechend einstellt.

14. Verfahren nach den Ansprüchen 12 bis 13, wobei die Substanz eine Knochenstruktur umfasst, **dadurch gekennzeichnet, dass** die Nacherwärmung so angepasst ist, dass sie die Knochenstruktur spezifisch erwärmt.

15. Verfahren nach den Ansprüchen 12 bis 14, **dadurch gekennzeichnet, dass** Festkörper-Hochfrequenzquelle(n) (6) verwendet werden, um den Gargrad der Substanz zu messen.

## Revendications

1. Ligne (1) pour cuire une substance avec un appareil comprenant une multitude de solide-source(s) de radiofréquence à semi-conducteurs (6) et un autre appareil de traitement thermique (4, 6, 12, 15, 19, 22, 26), dans lequel chaque source de radiofréquence à semi-conducteurs(6) comprend un amplificateur de puissance RF qui commande l'antenne d'un émetteur, dans lequel l'antenne est également un capteur qui détecte l'énergie réfléchie et dans lequel la ligne comprend un système de commande qui compare l'énergie transmise via l'antenne avec l'énergie réfléchie et ajuste en conséquence l'énergie à transmettre par l'antenne.

2. Ligne (1) selon la revendication 1, **caractérisée en ce que** l'appareil est relié par des moyens de transport (10).

3. Ligne (1) selon la revendication 1 ou 2, **caractérisée en ce que** les sources de radiofréquence à semi-conducteurs >(6) sont disposées en un réseau de n colonnes et m rangées, où n est un nombre entier supérieur à 1 et m est un nombre entier inférieur ou égal à 1.

4. Ligne (1) selon les revendications 1 à 3, **caractérisée en ce que** les sources (6) sont disposées à intervalles réguliers autour de la circonférence de la chambre à produits (14).

5. Ligne (1) selon les revendications 2 à 4, **caractérisée en ce que** les colonnes s'étendent autour de la bande transporteuse.

6. Ligne (1) selon l'une des revendications 2 à 5, **caractérisée en ce qu'**au moins la section dans laquelle la ou les sources de radiofréquence à semi-conducteurs (6) sont prévues est blindée.

7. Ligne (1) selon l'une des revendications précédentes, **caractérisée en ce que** :
- une étape de préchauffage par micro-ondes à partir d'une source d'énergie RF à semi-conducteurs est suivie d'une étape de friture ou vice versa et/ou
- une étape de précuisson par micro-ondes à partir d'une source d'énergie RF à semi-conducteurs est suivie d'une étape de cuisson ou vice versa et/ou
- Une étape de séchage par micro-ondes à partir d'une source d'énergie RF à semi-conducteurs est suivie d'une étape de brunissage ou vice versa et/ou
- étape de séchage par micro-ondes à source d'énergie RF à l'état solide suivie d'une étape de torréfaction ou vice versa et/ou
- étape de séchage par micro-ondes à source d'énergie RF à l'état solide suivie d'une étape de fumage ou vice versa et/ou
- une étape de friture est suivie d'une étape de précuisson par micro-ondes à source d'énergie RF à l'état solide, qui est suivie d'une étape de brunissage et/ou de torréfaction et/ou de fumage et/ou d'irradiation ou dans un ordre différent et/ou
- Une étape de stabilisation de la pâte par micro-ondes à partir d'une source d'énergie RF à semi-conducteurs est suivie d'une étape de battage.
est prévue.

8. Ligne (1) selon l'une des revendications précédentes, **caractérisée en ce que** la ou les sources d'énergie RF à semi-conducteurs et les moyens de cuisson par convection sont prévus dans un boîtier, de préférence reliés par des moyens de transport.

9. Ligne (1) selon l'une des revendications précédentes, **caractérisée en ce qu'**elle comprend des moyens (M) pour mesurer le degré de cuisson.

10. Ligne (1) selon la revendication 9, **caractérisée en ce que** la mesure de la cuisson est effectuée à l'aide de la source d'énergie RF à semi-conducteurs.

11. Ligne (1) selon l'une des revendications précédentes, dans laquelle la substance comprend une structure osseuse, **caractérisée en ce qu'**au moins une source de radiofréquence à l'état solide (6) est commandée pour chauffer spécifiquement la structure osseuse et/ou la viande entourant la structure osseuse.

12. Procédé de cuisson d'une substance avec une ligne selon les revendications 1 à 11.

13. Procédé selon les revendications 12, **caractérisé en ce que** les paramètres de la substance sont entrés dans un système de commande et qu'une unité de commande règle les paramètres au moins pour l'étape de chauffage par micro-ondes à source d'énergie RF à l'état solide en conséquence.

14. Procédé selon les revendications 12 à 13, dans lequel la substance comprend une structure osseuse, **caractérisé en ce que** le post-chauffage est adapté pour chauffer spécifiquement la structure osseuse.

15. Procédé selon les revendications 12 à 14, **caractérisé en ce que** la ou les sources de radiofréquence à l'état solide (6) sont utilisées pour mesurer le degré de cuisson de la substance.
